# EUROPÄISCHE PATENTSCHRIFT

(11) **EP 3 703 868 B1**
(45) Veröffentlichungstag und Bekanntmachung des Hinweises auf die Patenterteilung: **16.11.2022**
(21) Anmeldenummer: 18701422.0
(22) Anmeldetag: 16.01.2018
(51) Int. Cl.: B05B 12/14

(54) **MODUL FÜR EINE MODULARE WECHSELEINRICHTUNG FÜR BESCHICHTUNGSMATERIALIEN SOWIE WECHSELEINRICHTUNG FÜR BESCHICHTUNGSMATERIALIEN**
MODULE FOR A MODULAR CHANGING DEVICE FOR COATING MATERIALS AND CHANGING DEVICE FOR COATING MATERIALS
MODULE POUR DISPOSITIF DE REMPLACEMENT MODULAIRE POUR MATÉRIAUX DE REVÊTEMENT ET DISPOSITIF DE REMPLACEMENT POUR MATÉRIAUX DE REVÊTEMENT

(30) Priorität: 20.02.2017 DE 102017103454
(43) Veröffentlichungstag der Anmeldung: 09.09.2020
(73) Patentinhaber: Eisenmann SE, 71032 Böblingen (DE)
(72) Erfinder: HALLER, Katrin, 71083 Herrenberg (DE); FRIEDERICH, Tillmann, 70563 Stuttgart (DE)
(74) Vertreter: Ostertag & Partner Patentanwälte mbB
(86) Internationale Anmeldenummer: PCT/EP2018/051031
(87) Internationale Veröffentlichungsnummer: WO 2018/149580

(56) Entgegenhaltungen:
- EP-A2- 0 185 502
- WO-A1-2008/019737
- CA-A1- 2 038 124
- US-A- 5 146 950
- US-A1- 2002 166 899

## Beschreibung

Die Erfindung betrifft ein Modul für eine modulare Wechseleinrichtung für Beschichtungsmaterialien, insbesondere für Lacke, mit
a) einem Gehäuse;
b) einem Fluidkanal, welchem von außen ein Fluidmaterial zuführbar ist;
c) einem Abgabekanal, welcher mit einer Verbrauchereinrichtung verbindbar ist und welcher über einen Strömungsweg mit dem Fluidkanal in Verbindung steht;
   wobei
d) der Strömungsweg zwischen dem Fluidkanal und dem Abgabekanal mittels einer Verschlusseinrichtung wahlweise verschließbar oder freiggebbar ist;
e) der Fluidkanal als Durchgangskanal ausgebildet ist und sich zwischen einem von außen zugänglichen ersten Anschluss auf einer ersten Anschlussseite des Gehäuses und einem von außen zugänglichen zweiten Anschluss auf einer zweiten Anschlussseite des Gehäuses erstreckt,
   wobei
   die beiden Anschlüsse des Fluidkanals derart komplementär zueinander ausgebildet sind, dass bei zwei miteinander verbundenen Modulen der zweite Anschluss des ersten Moduls und der erste Anschluss des zweiten Moduls fluiddicht miteinander verbunden sind;
   und/oder
f) der Abgabekanal ein erster Abgabekanal ist und das Modul einen zweiten Abgabekanal oder mehrere weitere Abgabekanäle umfasst, welche jeweils über einen Strömungsweg mit dem Fluidkanal in Verbindung stehen;
   wobei
g) die Verschlusseinrichtung ein druckluftbetätigtes Ventil umfasst, welches über einen Drucklufteingangsanschluss mit Druckluft beaufschlagbar ist.

Außerdem betrifft die Erfindung eine Wechseleinrichtung für Beschichtungsmaterial, welche aus mehreren Modulen aufgebaut ist.

Eine Wechseleinrichtung für Beschichtungsmaterialien, im Falle einer Lackieranlage eine Farbwechseleinrichtung, wird in der Regel dann eingesetzt, wenn es im normalen Betrieb wiederholt vorkommt, dass für die Beschichtung eines Gegenstandes ein anderer Lack verwendet werden soll als derjenige Lack, mit welchem ein vorhergehender Gegenstand lackiert wurde.

Ein Modul für eine Wechseleinrichtung und eine Wechseleinrichtung sind aus der US 6 892 764 B2 bekannt. Das dort beschriebene Modul umfasst als Abgabekanal einen einzigen Farbkanal, der beim zusammensetzen einzelner Module zu einer Farbwechseleinrichtung entsprechend verlängert wird. Dieser Farbkanal steht im Betrieb über einen Farbschlauch mit einer Lackspritzpistole in Verbindung. Eine modular aufgebaute Farbwechseleinrichtung hat den Vorteil, dass Sie einfach um ein Modul erweitert oder verkleinert werden kann, wodurch die Farbwechseleinrichtung entsprechend an die jeweils benötigte Anzahl von zu verwendenden Lacken angepasst werden kann.

Die US 5,146,950 A beschreibt dagegen ein Modul für eine Wechseleinrichtung und eine Wechseleinrichtung der eingangs genannten Art.

Allerdings kann mit dieser bekannten Farbwechseleinrichtung immer nur Lack an einen einzigen Verbraucher, beispielsweise eine Applikationseinrichtung wie ein

Hochrotationszerstäuber, abgegeben werden. Wenn mehrere Verbraucher mit einem oder mehreren Beschichtungsmaterialien versorgt werden sollen, muss für jeden vorhandenen Verbraucher eine entsprechende Farbwechseleinrichtung vorgesehen werden.

Es ist daher Aufgabe der Erfindung, ein Modul für eine Wechseleinrichtung und eine Wechseleinrichtung für Beschichtungsmaterialien der jeweils eingangs genannten Art bereitzustellen, welche die Flexibilität der Wechseleinrichtung demgegenüber erhöht.

Diese Aufgabe wird bei einem Modul für eine Wechseleinrichtung der eingangs genannten Art dadurch gelöst, dass
h) der Drucklufteingangsanschluss ein erster Drucklufteingangsanschluss auf der ersten Anschlussseite des Moduls ist und das Modul wenigstens einen zweiten Drucklufteingangsanschluss auf der ersten Anschlussseite umfasst, welcher über einen Verbindungskanal mit einem Druckluftausgangsanschluss auf der zweiten Anschlussseite verbunden ist;
i) der erste Drucklufteingangsanschluss und der Druckluftausgangsanschluss derart komplementär zueinander ausgebildet sind, dass bei zwei miteinander verbundenen Modulen der Druckluftausgangsanschluss des ersten Moduls und der erste Drucklufteingangsanschluss des zweiten Moduls fluiddicht miteinander verbunden sind.

Eine Wechseleinrichtung kann hierdurch auf vorteilhafte Weise über eine Art universelles Versorgungsmodul angesteuert werden.

Bei der aus zwei oder mehreren Modulen aufgebauten Wechseleinrichtung stehen zwei oder mehrere Abgabekanäle zur Verfügung, die aus einem gemeinsamen Fluidkanal gespeist werden.

Bei der ersten Alternative kann die Anzahl der Abgabekanäle durch das Zusammenfügen der Module erhöht werden, so dass bei der Wechseleinrichtung mindestens zwei oder mehr Abgabekanäle zur Verfügung stehen können. Bei der zweiten Alternative können bereits mehrere Abgabekanäle in einem Modul vorhanden sein und durch Zusammenfügen der Module kann dann die Anzahl der Fluidkanäle und somit der Zuführmöglichkeiten für Fluidmaterialien erhöht werden. Wenn die Fluidkanäle in diesem Fall ebenfalls als Durchgangskanäle ausgebildet sind, kann auch die Anzahl der Abgabekanäle erhöht werden, nämlich mit jedem Modul in Höhe der Zahl, in welcher das Modul Abgabekanäle aufweist.

Um die Anzahl der Fluidkanäle in der Wechseleinrichtung erhöhen zu können, ist es günstig, wenn
a) der Abgabekanal als Durchgangskanal ausgebildet ist und sich zwischen einem von außen zugänglichen ersten Anschluss auf einer ersten Abgabeseite des Gehäuses und einem von außen zugänglichen zweiten Anschluss auf einer zweiten Abgabeseite des Gehäuses erstreckt;
b) die beiden Anschlüsse des Abgabekanals derart komplementär zueinander ausgebildet sind, dass bei zwei miteinander verbundenen Modulen der zweite Anschluss des ersten Moduls und der erste Anschluss des zweiten Moduls fluiddicht miteinander verbunden sind.

Bei dieser Ausbildung kann der oder können die vorhandenen Abgabekanäle mit jedem zusätzlichen Modul verlängert werden. Da es bei jedem Modul mindestens einen Fluidkanal für das Beschichtungsmaterial gibt, erhöht sich dann mit jedem Modul die Zahl der Fluidkanäle bei der Wechseleinrichtung.

Es ist vorteilhaft, wenn der erste Anschluss des Fluidkanals und/oder des Abgabekanals und/oder der zweite Anschluss des Fluidkanal und/oder des Abgabekanals als komplementäre Ausnehmungen ausgebildet sind, die mit einem Dichtungselement zusammenarbeiten.

Es ist günstig, wenn der Fluidkanal ein erster Fluidkanal ist und das Modul einen zweiten Fluidkanal oder mehrere weitere Fluidkanäle umfasst, welchen jeweils von außen Fluidmaterial zuführbar ist. Somit ist die Zahl der pro Modul bereits zur Verfügung stehenden Fluidkanäle und Zuführmöglichkeiten für Fluidmaterialien erhöht.

Bei dieser Ausbildung kann die Druckluft durch zumindest eines von zwei miteinander verbundenen Modulen hindurch zu dem zweiten Modul geleitet werden, dessen Ventil angesteuert werden soll.

Dieses Konzept kann für eine größere Anzahl von Modulen umgesetzt werden, wenn das Modul eine Anzahl M >= 3 an Drucklufteingangsanschlüssen umfasst und eine Anzahl N = M - 1 an Druckluftausgangsanschlüssen umfasst, wobei jeder weitere ab dem dritten Drucklufteingangsanschluss über einen Verbindungskanal mit jeweils einem der weiteren ab dem zweiten Druckluftausgangsanschluss verbunden ist, und jeder ab dem zweiten Drucklufteingangsanschluss und jeder ab dem zweiten Druckluftausgangsanschluss derart komplementär zueinander ausgebildet sind, dass bei zwei miteinander verbunden Modulen jeweils jeder ab dem zweiten Drucklufteingangsanschluss des ersten Moduls mit jeweils einem ab dem zweiten Druckluftausgangsanschluss des zweiten Moduls verbunden ist.

Die oben genannte Aufgabe wird bei der Wechseleinrichtung der eingangs genannten Art dadurch gelöst, dass wenigstens ein Modul als Modul mit einigen oder allen der oben erläuterten Merkmale ausgebildet ist.

Im Hinblick auf die angesprochene zentrale Versorgung der Module ist es günstig, wenn ein Versorgungsmodul vorhanden ist, welches mit dem Modul verbindbar ist und einen oder mehrere Versorgungsaußenanschlüsse für Fluidmaterialien bereitstellt, wobei ein vorhandener Versorgungsaußenanschluss mit einem ersten Anschluss eines vorhandenen Fluidkanals verbindbar ist.

Hierzu ist es besonders von Vorteil, wenn das Versorgungsmodul für jeden vorhandenen ersten Anschluss eines Fluidkanals des Moduls einen Koppelanschluss aufweist, der mit einem Versorgungsaußenanschluss verbunden ist und mit dem ersten Anschluss des Fluidkanals komplementär ist.

Außerdem ist es günstig, wenn das Versorgungsmodul einen oder mehrere Druckluftaußenanschlüsse umfasst, die mit Druckluftversorgungsanschlüssen verbunden sind, die ihrerseits zu vorhandenen Drucklufteingangsanschlüssen eines Moduls komplementär sind.

In der Praxis ist es günstig, wenn auf der von dem Versorgungsmodul abliegenden Seite des wenigstens einen oder der mehreren Module ein Sockelmodul angeordnet ist, welches einen oder mehrere als Sackkanäle ausgebildete, nicht-durchgehende Fluidkanäle umfasst, von denen jeder einen als Durchgangskanal ausgebildeten Fluidkanal des benachbarten Moduls abschließt. Wenn dieses Sockelmodul ebenfalls einen mit dessen Fluidkanälen verbundenen Abgabekanal umfasst, kann auf dem Wege über das Sockelmodul ebenfalls Beschichtungsmaterial abgegeben werden.

Nachfolgend werden Ausführungsbeispiele der Erfindung anhand der Zeichnungen näher erläutert. In diesen zeigen:
- Figur 1: eine perspektivische Ansicht einer modularen Wechseleinrichtung gemäß einem ersten Ausführungsbeispiel, welche ein Versorgungsmodul, mehrere Verteilermodule und ein Sockelmodul umfasst und bei welcher nur die Anzahl von Abgabeanschlüssen durch die Anzahl der Verteilermodule eingerichtet werden kann;
- Figur 2: eine Seitenansicht der Wechseleinrichtung von Figur 1;
- Figur 3: einen Vertikalschnitt der Wechseleinrichtung von Figur 2 entlang der dortigen Schnittlinie III-III, wobei nicht alle in Figur 2 zu erkennende Außenanschlüsse gezeigt sind;
- Figur 4: das Versorgungsmodul im Schnitt gemäß Figur 3;
- Figur 5: ein Verteilermodul im Schnitt gemäß Figur 3;
- Figur 6: das Sockelmodul im Schnitt gemäß Figur 3;
- Figur 7: einen Vertikalschnitt der Wechseleinrichtung von Figur 2 entlang der dortigen Schnittlinie VII-VII, wobei in Figur 2 zu erkennende Anschlüsse nicht gezeigt sind;
- Figur 8: das Versorgungsmodul im Schnitt gemäß Figur 7;
- Figur 9: ein Verteilermodul im Schnitt gemäß Figur 7;
- Figur 10: das Sockelmodul im Schnitt gemäß Figur 7;
- Figur 11: einen Horizontalschnitt eines Verteilermoduls gemäß der Schnittlinie XI-XI in Figur 2;
- Figur 12: einen Horizontalschnitt des Sockelmoduls gemäß der Schnittlinie XII-XII in Figur 2;
- Figur 13: einen Vertikalschnitt der Wechseleinrichtung entlang der gewinkelten Schnittlinie XIII-XIII in den Figuren 11 und 12;
- Figur 14: eine Wechseleinrichtung gemäß einem zweiten Ausführungsbeispiel, welche aus zwei Wechseleinrichtungen gemäß Figur 1 ausgebildet ist, bei denen statt des Sockelmoduls jeweils ein Verteilermodul vorgesehen ist;
- Figur 15: eine perspektivische Ansicht einer modularen Wechseleinrichtung gemäß einem dritten Ausführungsbeispiel, bei welcher nur die Anzahl von Versorgungsaußenanschlüssen durch die Anzahl der Verteilermodule eingerichtet werden kann und bei welcher ein Versorgungsmodul und ein Verteilermodul eine Modulbaugruppe bilden;
- Figur 16: einen Vertikalschnitt einer Modulbaugruppe gemäß der Schnittebene XVI in Figur 15;
- Figur 17: eine perspektivische Ansicht einer modularen Wechseleinrichtung gemäß einem vierten Ausführungsbeispiel, welche mehrere Anschlussmodule, mehrere Verteilermodule und ein Abgabeanschlussmodul umfasst und bei welcher die Anzahl von Zuführanschlüssen und die Anzahl von Abgabeanschlüssen durch die Anzahl der Verteilermodule eingerichtet werden kann.

Nachfolgend werden Bauteilen und Komponenten Bezugszeichen zugeordnet, die mit einem Punkt "." gefolgt von einem Index versehen sind, beispielsweise 20.i oder 28.i Dabei sind Bauteile und Komponenten, deren Index nach dem Punkt"." denselben Ziffernwert haben, als zusammenwirkende Bauteile und Komponenten zu verstehen, welche insbesondere strömungstechnisch zusammenarbeiten.

Darüber hinaus gibt es Bauteile und Komponenten, welche Bezugszeichen tragen, die nach dem Index, der auf den Punkt "." folgt, noch einen weiteren Index haben, der nach einem Strich "-" folgt. Indizes nach einem Strich "-" zeigen an, dass es sich um mehrere Bauteile und Komponenten handelt, die entsprechend funktionell mit Bauteilen verknüpft sind, deren Index nach dem Punkt "." denselben Ziffernwert hat, wie der Index nach dem "." des mit dem weiteren Index nach dem Strich "-" versehenen Bauteils. Beispielsweise arbeiten Bauteile 64.3-1, 64.3-2 und 64.3-3 mit Bauteilen 66.3 zusammen.

Es werden dieser Systematik folgend stellenweise auch zu Bauteilen Bezugszeichen angegeben, die in den Figuren nicht explizit zu sehen sind, um deren Zugehörigkeit zu verdeutlichen.

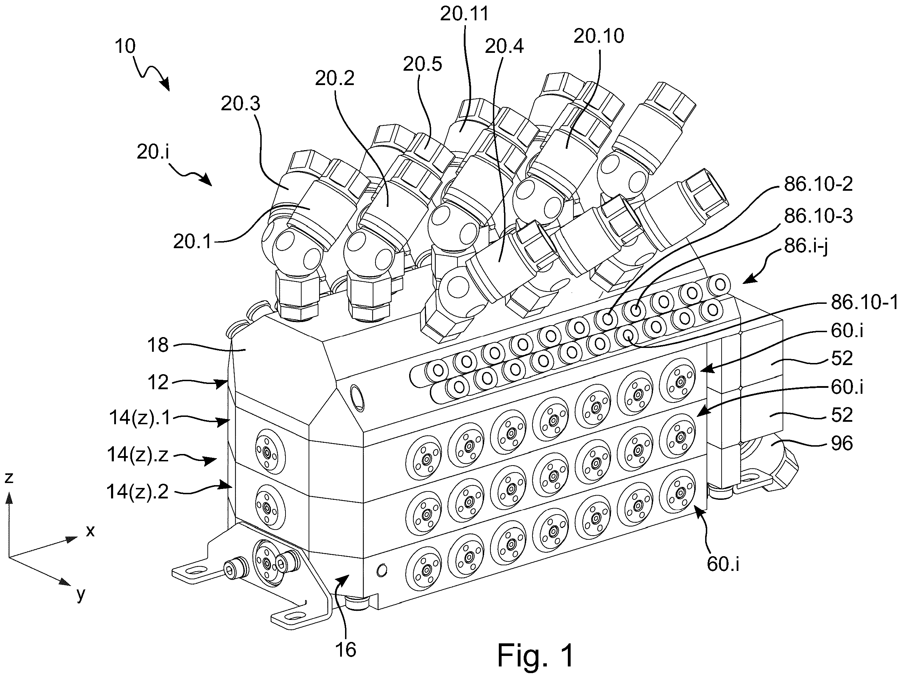

Zunächst wird nun auf die Figuren 1 bis 13 Bezug genommen, in welchen eine modular aufgebaute Wechseleinrichtung 10 für Beschichtungsmaterialien gemäß einem ersten Ausführungsbeispiel gezeigt ist.

Ein in den Figuren gezeigtes Bezugs-Koordinatensystem sei fest mit der Wechseleinrichtung 10 verankert, so dass es sich mit der Wechseleinrichtung 10 im Raum mitbewegt.

Die Wechseleinrichtung 10 umfasst ein Versorgungsmodul 12, mehrere Verteilermodule 14(z).z mit z = 1 bis Z und ein Sockelmodul 16, das auf der von dem Versorgungsmodul 12 abliegenden Seite der Verteilermodule 14(z).z angeordnet ist. Beim gezeigten Ausführungsbeispiel ist Z = 2 und es sind zwei Verteilermodule 14(z).1, 14(z).2 vorhanden. Die Bezeichnung 14(z) und die Verwendung des Index z soll veranschaulichen, dass die Verteilermodule 14(z).z so konzipiert sind, dass sie in z-Richtung aufeinanderfolgend angeordnet sind bzw. angeordnet werden können.

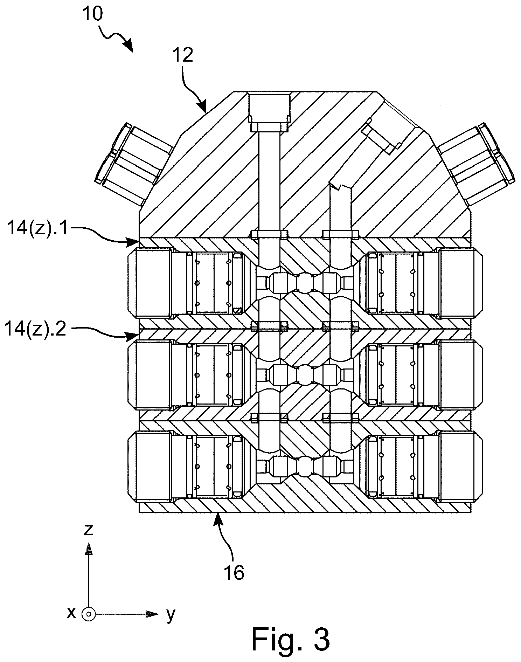

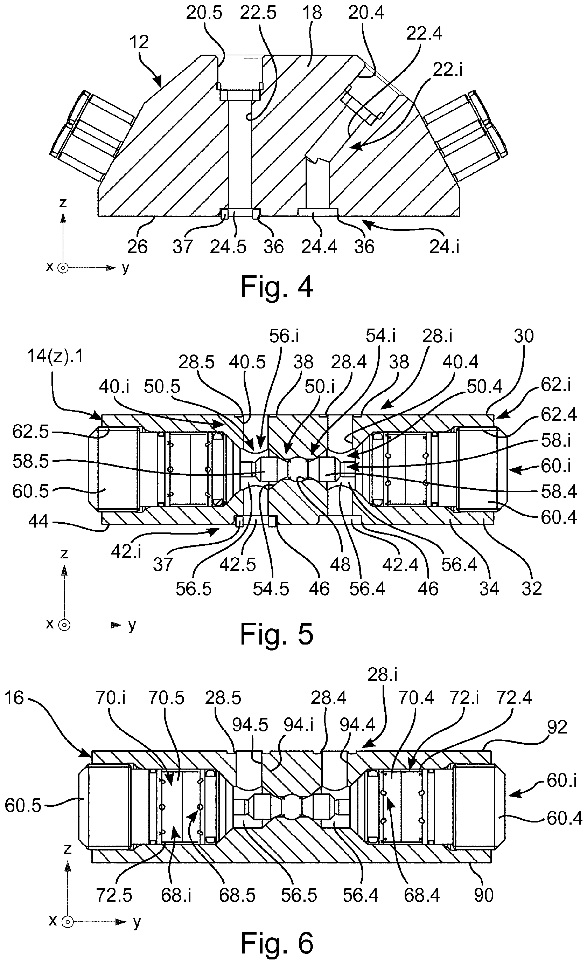

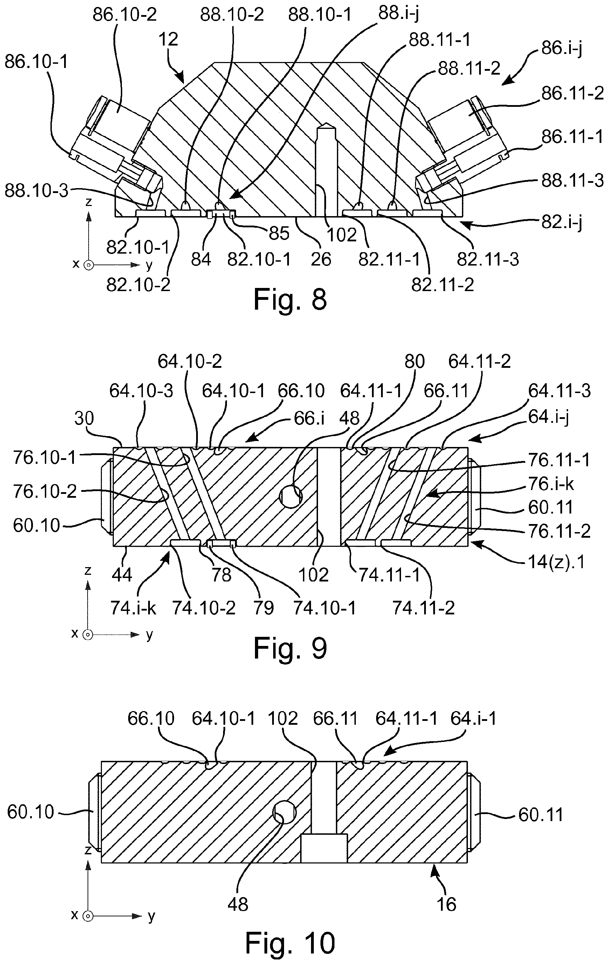

Das Versorgungsmodul 12 wird nun anhand der Figuren 4 und 8 erläutert und ist auch nur dort mit einzelnen Bezugszeichen versehen. Im in Figur 3 gezeigten Schnitt sind nur die Module mit ihren Bezugszeichen versehen.

Das Versorgungsmodul 12 hat als Gehäuse einen Versorgungsgehäuseblock 18, der Versorgungsaußenanschlüsse 20.i mit i=1 bis L für Fluidmaterialien bereitstellt, welche mit jeweils einem Reservoir eines Fluidmaterials verbunden werden können, die hier nicht eigens gezeigt sind. Die Versorgungsaußenanschlüsse 20.i sind beim vorliegenden Ausführungsbeispiel als Schlauchaufnahmen konzipiert.

Unter Reservoir wird vorliegend jede technische Lösung verstanden, um unterschiedliche Fluide bereitzustellen oder aufzunehmen. Hierzu zählen somit zum Beispiel auch Ringleitungssysteme für Flüssigkeiten, wie sie an und für sich bekannt sind. Bei den Fluidmaterialien kann es sich um Beschichtungsmaterialien, insbesondere um Lacke, Reinigungsflüssigkeiten oder Gase, und dabei insbesondere um Druckluft, handeln.

Über einen Versorgungsaußenanschluss 20.i kann ein Fluidmaterial nicht nur der Wechseleinrichtung 10 zugeführt, sondern auch von der Wechseleinrichtung 10 abgeführt werden.

Beim vorliegenden Ausführungsbeispiel ist L = 15, wobei die somit insgesamt 15 Versorgungsaußenanschlüsse 20 einen Druckluftanschluss 20.1 für Druckluft aus einem Druckluftreservoir, einen Lösemittelanschluss 20.2 für ein Lösemittel aus einem Lösemittelreservoir und 13 Lackanschlüsse 20.3, 20.4, ..., 20.15 für unterschiedliche Lacke aus jeweils zugehörigen Lackreservoiren vorhanden sind, die nicht alle ein Bezugszeichen tragen. Fördereinrichtungen wie Pumpen, Kompressoren und zugehörige Komponenten, um einzelne Fluidmaterialien zu fördern, sind nicht eigens gezeigt.

Wie in Figur 4 zu erkennen ist, sind die Versorgungsaußenanschlüsse 20.i über jeweils einen Versorgungskanal 22.i mit i = 1 bis L mit Koppelanschlüssen 24.i mit i = 1 bis L auf einer Koppelseite 26 des Versorgungsmoduls 12 verbunden. Dies lässt Figur 4 in Form der Versorgungskanäle 22.4 und 22.5 und der Koppelanschlüsse 24.4 und 24.5 für die Versorgungsaußenanschlüsse 20.4 und 20.5 erkennen. Beim vorliegenden Ausführungsbeispiel gibt es folglich 15 solche Versorgungskanäle 22.1, 22.2, ..., 22.15 und 15 Koppelanschlüsse 24.1, 24.2, ..., 24.15. Die Koppelseite 26 erstreckt sich beim vorliegenden Ausführungsbeispiel flächig in der xy-Ebene. Die Koppelanschlüsse 24.i sind in ihrer Anordnung und Ausführung komplementär zu der Anordnung und Ausführung von ersten, von außen zugänglichen Anschlüssen 28.i mit i = 1 bis L auf einer ersten Anschlussseite 30 eines Gehäuses 32 eines Verteilermoduls 14(z).z, welche sich ebenfalls flächig in der XY-Ebene erstreckt. Das Gehäuse 32 ist in der Praxis als Gehäuseblock 34 aus Edelstahl ausgebildet, so dass auch geringe Wandstärken möglich sind. Alternativ kommen auch Kunststoffe in Frage.

Beim vorliegenden Ausführungsbeispiel sind die Koppelanschlüsse 24.i des Versorgungsmoduls 12 jeweils als Anschlussausnehmung 36 ausgebildet, in welche ein Dichtungselement in Form eines Dichtungs-O-Rings 37 so eingelegt werden kann, dass er aus der Anschlussausnehmung 36 vorsteht, was in Figur 4 nur bei dem Koppelanschluss 24.5 gezeigt ist.

Bei dem hier und den nachfolgend erläuterten Ausführungsbeispielen werden als Dichtungselemente stets Dichtungs-O-Ringe eingesetzt. Alternativ können stattdessen auch andere bekannte Dichtungselemente wie zum Beispiel Teflonringe oder dergleichen verwendet werden. Teflonringe kommen insbesondere bei flüssigkeitsführenden Kanälen zum Einsatz.

Ein Verteilermodul 14(z).z wird nun anhand des Verteilermoduls 14(z).1 in den Figuren 5 und 9 erläutert und ist auch nur dort mit einzelnen Bezugszeichen versehen.

Die ersten Anschlüsse 28.i des Verteilermoduls 14(z).z sind als zum Dichtungs-O-Ring 37 komplementäre Ringausnehmung 38 ausgebildet, in welche der Dichtungs-O-Ring 37 einliegen kann. Wenn oben angesprochene Teflonringe als Dichtelemente verwendet werden, kann auf solche komplementäre Ringausnehmungen 38 verzichtet werden, so dass die Teflonringe gegen die plane Außenfläche des Verteilermoduls 14(z).z anliegen. Die Komplementarität bezeichnet in diesem Fall das Zusammenwirken der Anschlussausnehmung 36 mit dem Teflonring.

Jedes Verteilermodul 14(z).z umfasst mehrere Fluidkanäle 40.i mit i = 1 bis L, welche als Durchgangskanäle ausgebildet sind. Anschlüsse 28.i, welche einem Durchgangskanal 40.i zugeordnet sind, bilden in diesem Fall also Durchgangskanalanschlüsse. Die Fluidkanäle 40.i erstrecken sich jeweils zwischen einem zugehörigen ersten Anschluss 28.i auf der ersten Anschlussseite 30 des Verteilermoduls 14(z).z und einem zugehörigen, von außen zugänglichen zweiten Anschluss 42.i mit i = 1 bis L auf einer zweiten Anschlussseite 44. Die Anzahl L der Fluidkanäle 40.i entspricht der Anzahl L der Versorgungsaußenanschlüsse 20.i.

Beim vorliegenden Ausführungsbeispiel umgibt die Ringausnehmung 38 eines ersten Anschlusses 28.i die Öffnung eines zugehörigen Fluidkanals 40.i, von denen beim vorliegenden Ausführungsbeispiel jeder in z-Richtung verläuft.

Die beiden Anschlüsse 28.i und 42.i jedes Fluidkanals 40.i sind derart komplementär zueinander ausgebildet, dass bei zwei miteinander verbundenen Verteilermodulen 14(z).z die zweiten Anschlüsse 42.i des ersten Moduls 14(z), hier das Modul 14(z).1, und die ersten Anschlüsse 28.i des zweiten Moduls 14(z), hier das Modul 14(z).2, fluiddicht miteinander verbunden sind, was in Figur 3 ohne Angabe von Bezugszeichen veranschaulicht ist.

Dementsprechend sind die zweiten Anschlüsse 42.i des Verteilermoduls 14(z).z beim vorliegenden Ausführungsbeispiel als Anschlussausnehmung 46 für einen Dichtungs-O-Ring 37 ausgebildet, was in Figur 5 nur für den zweiten Anschluss 42.5 gezeigt ist. Die Anschlussausnehmungen 46 entsprechen somit den Anschlussausnehmungen 36 des Versorgungsmoduls 12.

Das Verteilermodul 14(z).z umfasst außerdem einen Abgabekanal 48, welcher mit einer Verbrauchereinrichtung verbunden werden kann und welcher über jeweils einen Strömungsweg 50.i mit i= 1 bis L mit den Fluidkanälen 40.i in Verbindung steht. Eine entsprechende Verbrauchereinrichtung kann beispielsweise eine Applikationseinrichtung zum Applizieren von Lack, aber auch ein Vorlagebehälter oder gegebenenfalls ein weiterer Farbwechsler sein oder eine sonstige Einrichtung sein, welcher ein Fluidmaterial über die Wechseleinrichtung 10 zugeführt werden soll. Der Abgabekanal 48 endet in einem von außen zugänglichen Abgabeanschluss 52 des Verteilermoduls 14(z), über den Fluidmaterial dann von dem Verteilermodul 14(z).z abgegeben werden kann.

Der Abgabeanschluss 52 ist nur in den Figuren 1, 2 und 11 gezeigt. Wie dort zu erkennen ist, ist der Abgabeanschluss 52 als separates Bauteil mit dem Abgabekanal 48 verbunden. Der Abgabeanschluss 52 kann aber auch ein integrativer Teil des Abgabekanals 48 sein.

Der Abgabekanal 48 erstreckt sich senkrecht zu den Fluidkanälen 40.i in x-Richtung. In den Figuren 3 und 5 ist zu erkennen, dass der jeweilige Strömungsweg 50.i zwischen jeweils einem Fluidkanal 40.i und dem Abgabekanal 48 jeweils durch einen Ventilsitz 54.i und eine Ventilsitzkammer 56.i für ein Dichtelement 58.i eines druckluftbetätigten Ventils 60.i gebildet ist, wobei jeweils i = 1 bis L ist. In den Figuren 3 und 5 ist trägt hiervon jeweils nur eine Komponente ein Bezugszeichen. Es ist folglich für jeden Fluidkanal 40.i ein Ventil 60.i vorhanden. Jedes Ventil 60.i ist in einer gesonderten Ventilaufnahme 62.i mit i = 1 bis L im Gehäuse 32 untergebracht.

Die Ventile 60.i bilden eine Verschlusseinrichtung, mittels welcher der Strömungsweg 50.i zwischen dem Fluidkanal 40.i und dem Abgabekanal 48 wahlweise verschließbar oder freiggebbar ist,

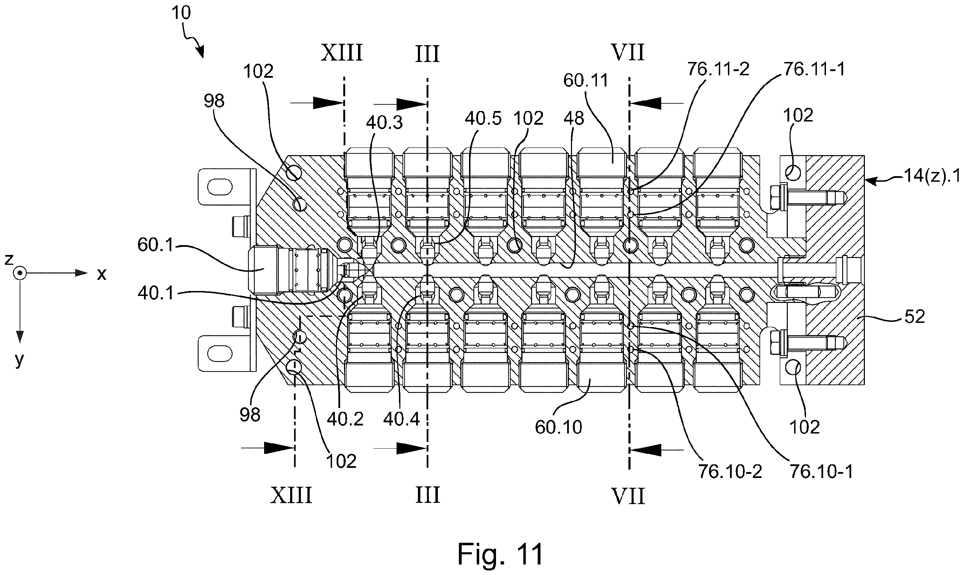

Bei vorliegenden Ausführungsbeispiel ist der Fluidkanal 40.1, dessen erster Anschluss 28.1 mit dem Versorgungsaußenschluss 20.1 verbunden ist, an dem vom Abgabeanschluss 52 abliegenden Ende des Abgabekanals 48 fluchtend mit diesem angeordnet, wogegen die übrigen Fluidkanäle 40.2 bis 40.15 immer paarweise zu beiden Seiten des Abgabekanals 48 angeordnet sind; dies veranschaulicht wieder Figur 11.

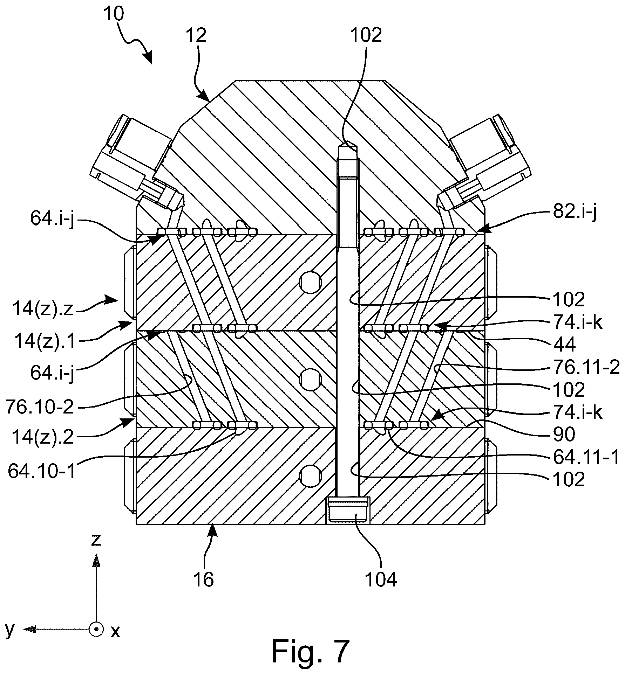

Das Verteilermodul 14(z).z umfasst eine Vielzahl von nur in den Figuren 7 und 9 zu erkennenden Drucklufteingangsanschlüssen 64.i-j mit i = 1 bis L und j = 1 bis M, wobei jedem Ventil 60.i bzw. jeder Ventilaufnahme 62.i eine Anzahl M der Drucklufteingangsanschlüsse 64.i-j zugeordnet ist. Die Drucklufteingangsanschlüsse 64.i-j sind von außen zugänglich auf der ersten Anschlussseite 30 des Verteilermoduls 14(z).z vorgesehen. Beim vorliegenden Ausführungsbeispiel ist M = 3, d.h. für jedes Ventil 60.i bzw. jede Ventilaufnahme 62.i gibt es einen ersten Drucklufteingangsanschluss 64.i-1, einen zweiten Drucklufteingangsanschluss 64.i-2 und einen dritten Drucklufteingangsanschluss 64.i-3, wobei es insgesamt L × M, vorliegend also 15 × 3 = 45 Drucklufteingangsanschlüsse 64.i-j gibt.

Figur 9 zeigt dementsprechend die Drucklufteingangsanschlüsse 64.10-1, 64.10-2 und 64.10-3, die dem zehnten Ventil 60.10 in der zehnten Ventilaufnahme 62.10 zugeordnet sind, und die Drucklufteingangsanschlüsse 64.11-j, die dem elften Ventil 60.11 in der elften Ventilaufnahme 62.11 zugeordnet sind.

Eine Ventilaufnahme 62.i ist über einen Druckluftkanal 66.i mit dem ersten Drucklufteingangsanschluss 64.i-1 verbunden. Die Ventilaufnahme 62.i, der darin mündende Druckluftkanal 66.i und das Ventil 60.i sind so aufeinander abgestimmt, dass das Ventil 60.i durch an dem Druckluftkanal 64.i anliegende Druckluft betätigt werden kann. Im vorliegenden Fall gibt das Ventil 60.i den Strömungsweg 50.i zwischen dem Fluidkanal 40.i und dem Abgabekanal 48 frei, wenn es mit Druckluft beaufschlagt wird.

Beim gezeigten Ausführungsbeispiel kommen Ventile 60.i zum Einsatz, welche nur Figur 6 bezeichnete Druckluftzugangsöffnungen 68.i in einer Ringnut 70.i an der Außenseite ihres nicht eigens bezeichneten Ventilgehäuses haben. Die Ventilaufnahmen 62.i sind dazu derart komplementär ausgebildet, dass sich zwischen der nicht eigens gekennzeichneten Innenmantelfläche einer Ventilaufnahme 62.i und der Ringnut 70.i des Ventils 60.i ein gasdichter Ringraum 72.i bildet. Wenn also Druckluft an den ersten Drucklufteingangsanschluss 64.i-1 des Verteilermoduls 14(z).z angelegt wird, strömt diese Druckluft durch den Druckluftkanal 66.i in den Ringraum 72.i und von dort durch die Druckluftzugangsöffnungen 68.i des Ventils 60.i, wodurch dieses betätigt wird.

Auf der zweiten Anschlussseite 44 weist das Verteilermodul 14(z).z eine Vielzahl von Druckluftausgangsanschlüssen 74.i-k mit i = 1 bis L und k = 1 bis N, wobei N = M - 1 ist und jedem Ventil 60.i bzw. jeder Ventilaufnahme 62.i eine Anzahl N = M - 1 der Druckluftausgangsanschlüsse 74.i-k zugeordnet ist. Die Druckluftausgangsanschlüsse 74.i-k sind von außen zugänglich.

Beim vorliegenden Ausführungsbeispiel ist L = 15, M = 3 und somit N = 2, d.h. für jedes Ventil 60.i bzw. jede Ventilaufnahme 62.i gibt es einen ersten Druckluftausgangsanschluss 74.i-1 und einen zweiten Drucklufteingangsanschluss 74.i-2, wobei es insgesamt L × N, vorliegend also 15 × 2 = 30 Druckluftausgangsanschlüsse 74.i-k gibt.

In Figur 9 sind dementsprechend die Druckluftausgangsanschlüsse 74.10-1 und 74.10-2, die dem zehnten Ventil 60.10 in der zehnten Ventilaufnahme 62.10 zugeordnet sind, und die Druckluftausgangsanschlüsse 74.11-1 und 74.11-2, die dem elften Ventil 60.11 in der elften Ventilaufnahme 62.11 zugeordnet sind, gezeigt.

Ein Druckluftausgangsanschluss 74.i-k ist über einen Verbindungskanal 76.i-k mit dem Drucklufteingangsanschluss 64.i-j mit j = k + 1 verbunden. Dies bedeutet also vorliegend z.B., dass der erste Druckluftausgangsanschluss 74.10-1 über den ersten Verbindungskanal 76.10-1 mit dem zweiten Drucklufteingangsanschluss 64.10-2 verbunden ist oder der zweite Druckluftausgangsanschluss 74.11-2 über den zweiten Verbindungskanal 76.11-2 mit dem dritten Drucklufteingangsanschluss 64.11-3 verbunden ist, wie es Figur 9 veranschaulicht.

Die Drucklufteingangsanschlüsse 64.i-j und die Druckluftausgangsanschlüsse 74.i-k sind nun derart komplementär zueinander ausgebildet, dass bei zwei miteinander verbundenen Verteilermodulen 14(z).z ein jeweiliger Druckluftausgangsanschluss 74.i-k des ersten Moduls 14(z), hier des Moduls 14(z).1, und ein jeweiliger Drucklufteingangsanschluss 64.i-j des zweiten Moduls 14(z), hier des Moduls 14(z).2, fluiddicht miteinander verbunden sind, wobei k = j ist. Dies veranschaulicht Figur 7, welche zeigt, dass der Drucklufteingangsanschluss 64.10-1 des zweiten Verteilermoduls 14(z).2 mit dem Druckluftausgangsanschluss 74.10-1 des ersten Verteilermoduls 14(z).1 verbunden ist, ohne das dort eigens Bezugszeichen eingetragen sind.

Für diese Komplementarität sind beim vorliegenden Ausführungsbeispiel die Druckluftausgangsanschlüsse 74.i-k auf der zweiten Anschlussseite 44 des Verteilermoduls 14(z).z als Anschlussausnehmung 78 ausgebildet, die in Figur 9 nur beim Druckluftausgangsanschluss 74.1-2 bezeichnet ist. In die Ausnehmungen 78 kann ein Dichtungs-O-Ring 79 so eingelegt werden, dass er aus der Anschlussausnehmung 78 vorsteht, was in Figur 9 nur beim Druckluftausgangsanschluss 74.10-1 gezeigt ist.

Die Drucklufteingangsanschlüsse 64.i-j auf der ersten Anschlussseite 30 des Verteilermoduls 14(z).z sind als zum Dichtungs-O-Ring 79 komplementäre Ringausnehmung 80 ausgebildet, welche eine Öffnung des durch den Drucklufteingangsanschluss 64.i-j jeweils gespeisten Kanals, d.h. des Druckluftkanals 66.i oder eines der Verbindungskanäle 76.i-k, umgibt und in welche der Dichtungs-O-Ring 79 einliegen kann. Eine Ringausnehmung 80 ist in Figur 9 nur beim Drucklufteingangsanschluss 64.11-1 mit einem Bezugszeichen versehen.

Damit die Verteilermodule 14(z).z mit Druckluft versorgt werden können, umfasst das Versorgungsmodul 12 auf seiner Koppelseite 26 eine Vielzahl von Druckluftversorgungsanschlüssen 82.i-j mit i = 1 bis L und j = 1 bis M, die von außen zugänglich sind, wobei es für jedes Ventil 60.i bzw. für jede Ventilaufnahme 62.i eine Anzahl M der Druckluftversorgungsanschlüsse 82.i-j gibt, die logisch der Anzahl der Drucklufteingangsanschlüsse 64.i-j des Verteilermoduls 14(z).z entspricht. Beim vorliegenden Ausführungsbeispiel mit M = 3 gibt es also für jedes Ventil 60.i bzw. jede Ventilaufnahme 62.i einen ersten Druckluftversorgungsanschluss 82.i-1, einen zweiten Druckluftversorgungsanschluss 82.i-2 und einen dritten Druckluftversorgungsanschluss 82.i-3, wobei es insgesamt L × M, vorliegend also 15 × 3 = 45 Druckluftversorgungsanschlüsse 82.i-j gibt.

In Figur 8 sind entsprechend Druckluftversorgungsanschlüsse 82.10-1, 82.10-2, 82.10-3 und 82.11-1, 82.11-2, 82.11-3 zu erkennen.

Die Druckluftversorgungsanschlüsse 82.i-j sind in ihrer Anordnung und Ausführung komplementär zu der Anordnung und Ausführung der Drucklufteingangsanschlüsse 64.i-j des Verteilermoduls 14(z).z. Beim vorliegenden Ausführungsbeispiel sind Druckluftversorgungsanschlüsse 82.i-j des Versorgungsmoduls 12 also wieder als Anschlussausnehmung 84 ausgebildet, in welche ein Dichtungs-O-Ring 85 so eingelegt werden kann, dass er aus der Anschlussausnehmung 84 vorsteht, so dass dieser in der entsprechenden Ringausnehmung 80 des zugehörigen Drucklufteingangsanschlusses 64.i-j einliegt kann, wenn das Versorgungsmodul 12 mit dem Verteilermodul 14(z).1 verbunden ist. Dies ist in Figur 8 nur beim Druckluftversorgungsanschluss 82.10-1 gezeigt.

Das Versorgungsmodul 12 weist eine Vielzahl von Druckluftaußenanschlüssen 86.i-j mit i = 1 bis L und j = 1 bis M auf, von denen jeder über eine Druckluftleitung 88.i-j mit einem jeweiligen Druckluftversorgungsanschluss 82.i-j des Versorgungsmoduls 12 verbunden ist. Die Druckluftaußenanschlüsse 86.i-j können jeweils separat und ventilgesteuert mit Druckluft aus einer nicht eigens gezeigten Druckluftquelle beaufschlagt werden. In Figur 8 sind entsprechend Druckluftaußenanschlüsse 86.10-1 und 86.10-2 sowie 86.11-1 und 86.11-2 zu erkennen. Die Druckluftaußenanschlüsse 86.10-3 und 86.11-3 liegen vor der Schnittebene.

Das Sockelmodul 16 wird nun anhand der Figuren 6 und 10 erläutert und ist auch nur dort mit einzelnen Bezugszeichen versehen. Das Sockelmodul 16 ist grundsätzlich so konzipiert wie das Verteilermodul 14(z).z, weshalb funktional einander entsprechende Bauteile und Komponenten mit denselben Bezugszeichen versehen sind.

Anstelle von einer zweiten Anschlussseite 44 hat das Sockelmodul 16 eine geschlossene Auflageseite 90 und eine gegenüberliegende Anschlussseite 92 entspricht der erste Anschlussseite 30 des Verteilermoduls 14(z).z. Auf dieser Anschlussseite 92 des Sockelmoduls 16 sind entsprechend erste Anschlüsse 28.i vorhanden, welche komplementär zu den zweiten Anschlüssen 42.i der Verteilermodule 14(z).z sind.

Anstelle der durchgehenden Fluidkanäle 40.i sind beim Sockelmodul 16 als Sackkanäle ausgebildete, nicht-durchgehende Fluidkanäle 94.i vorhanden, welche die als Durchgangskanäle ausgebildeten Fluidkanäle 40.i des benachbarten Verteilermoduls abschließen. Die Fluidkanäle 94.i erstrecken sich jeweils vom einem zugehörigen Anschluss 28.i bis zur zugehörigen Ventilsitzkammer 56.i des Sockelmoduls 16.

Beim Sockelmodul 16 ist jedem Ventil 60.i bzw. jeder Ventilaufnahme 62.i auch nur lediglich ein Drucklufteingangsanschluss 64.i-j mit i = 1 bis L und j = 1 zugeordnet, die folglich das Bezugszeichen 64.i-1 tragen. In Figur 10 sind entsprechend die Drucklufteingangsanschlüsse 64.10-1 und 64.11-1 zu erkennen. Die Drucklufteingangsanschlüsse 64.i-1 des Sockelmoduls 16 sind in Anordnung und Ausbildung komplementär zu den jeweils ersten Druckluftausgangsanschlüssen 74.i-1 der Verteilermodule 14(z).z.

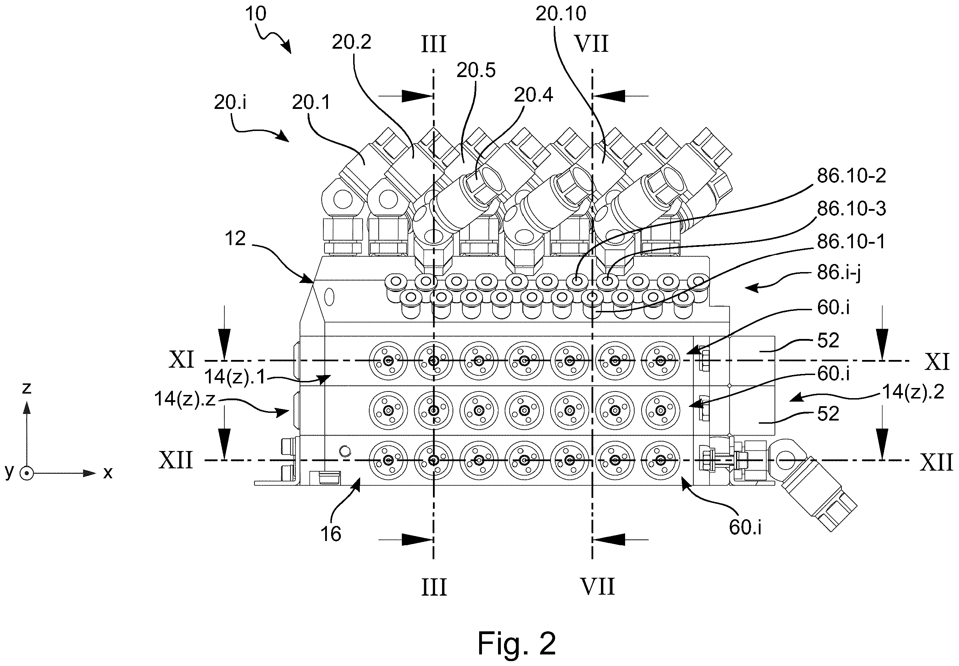

Der Abgabekanal 48 des Sockelmoduls 16 mündet in einen Dumpaußenanschluss 96, der mit einer Abziehleitung verbunden werden kann und der in den Figuren 1 und 2 zu erkennen ist.

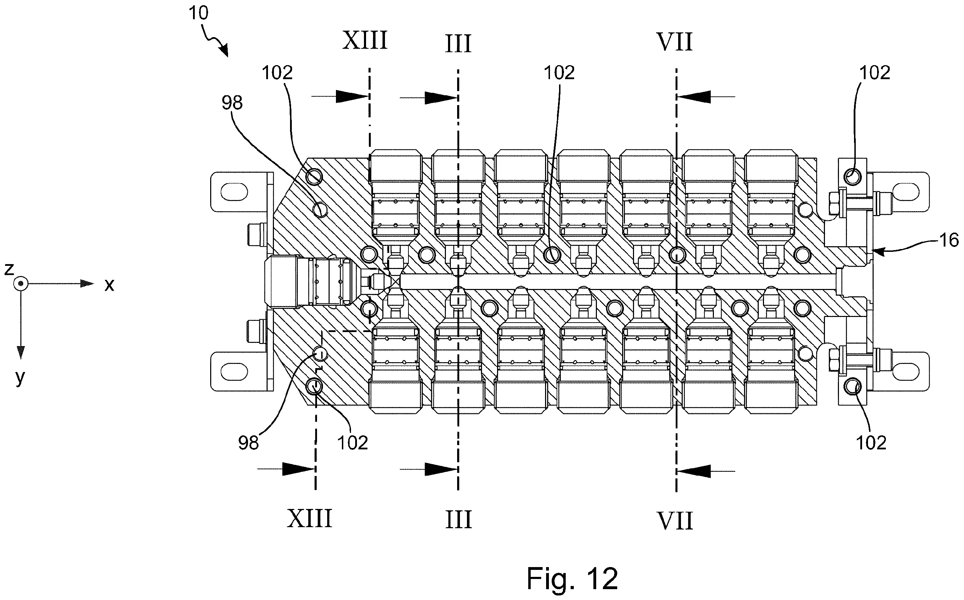

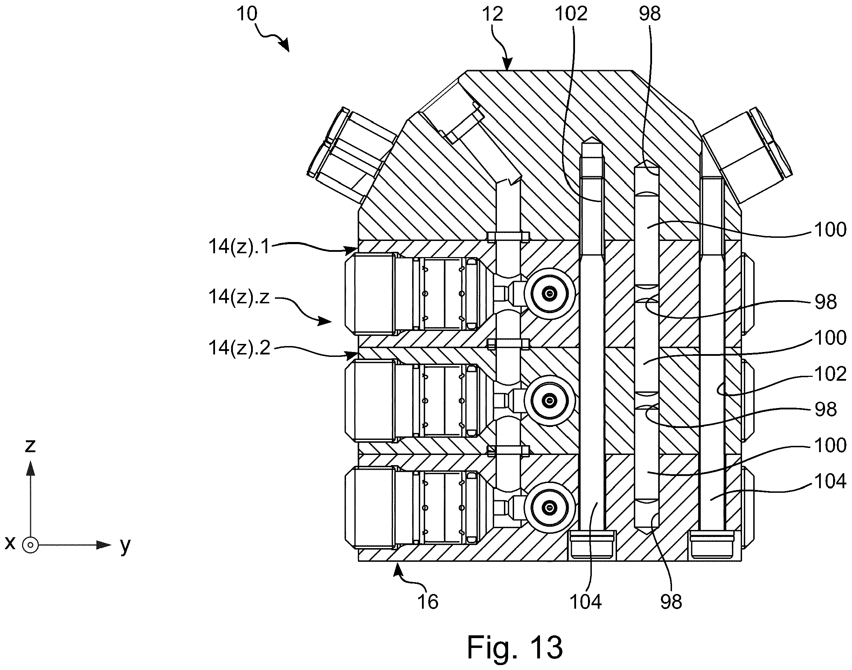

Damit das Versorgungsmodul 12, die Verteilermodule 14(z).z und das Sockelmodul 16 sicher und bezogen auf die zu verbindenden Anschlüsse passgenau zusammengefügt und miteinander verbunden werden können, weisen die Module 16, 14(z).z und 16 mehrere Zentrierkanäle 98 auf, in welche Zentrierstifte 100 eingesetzt werden können, so dass die Module 12, 14(z).z und 16 beim aneinandersetzen geführt sind. Zentrierkanäle 98 sind in den Figuren 11, 12 und 13 zu erkennen. Die Zentrierstifte 100 sind nur ein Figur 13 gezeigt. Bei den Verteilermodulen 14(z).z sind die Zentrierkanäle 98 als Durchgangskanäle von der ersten Anschlussseite 30 zur zweiten Anschlussseite 44 ausgebildet. Im Versorgungsmodul 12 und im Sockelmodul 16 liegen die Zentrierkanäle 98 dagegen als Sacklöcher vor. Die Zentrierkanäle 98 sind an den Figuren 11 und 12 linken äußeren Ecken der Module 12, 14(z).z und 16 vorgesehen.

Damit die Module 12, 14(z).z und 16 fest miteinander verbunden werden können, weisen die Module 12, 14(z).z und 16 darüber hinaus Schraubkanäle 102 auf, durch welche Schrauben 104 geführt werden können. Schraubkanäle 102 sind in den Figuren 7 bis 13 zu erkennen, wobei diese in den Figuren 11 und 12 als Doppelkreis dargestellt sind; es tragen nicht alle Schraubkanäle 102 ein Bezugszeichen. Schrauben 104 zeigen nur die Figuren 7 und 13. Beim vorliegenden Ausführungsbeispiel sind die Schrauben 104 von dem Sockelmodul 16 her eingeführt. Die Schrauben 104 weisen am dem Versorgungsmodul 12 zugewandten Ende ein Gewinde auf, das in ein entsprechendes Gegengewinde in dem zugehörigen Schraubkanal 102 im Versorgungsmodul 12 eingreift.

Bei dem oben erläuterten Ausführungsbeispiel hängt die maximale Anzahl Z der Verteilermodule 14(z).z, die zwischen dem Versorgungsmodul 12 und dem Sockelmodul 16 angeordnet werden können, von der Anzahl M der Drucklufteingangsanschlüsse 64.i-j pro Ventil 60.i bzw. pro Ventilaufnahme 62.i ab und es gilt Z = M - 1.

Wenn die Wechseleinrichtung 10 mit zwei Verteilermodulen 14(z).1 und 14(z).2 zusammengefügt ist, führt nun jeder erste Druckluftversorgungsanschluss 82.i-1 des Versorgungsmoduls 12 über den zugehörigen ersten Drucklufteingangsanschluss 64.i-1 des ersten Verteilermoduls 14(z).1 und weiter über dessen Kanal 66.i zu dem entsprechenden Ventil 60.i im ersten Verteilermodul 14(z).1.

Jeder zweite Druckluftversorgungsanschluss 82.i-2 des Versorgungsmoduls 12 führt über den zugehörigen zweiten Drucklufteingangsanschluss 64.i-2 des ersten Verteilermoduls 14(z).1 und dessen ersten Verbindungskanal 76.i-1 zum ersten Druckluftausgangsanschluss 74.i-1, der mit dem ersten Drucklufteingangsanschluss 64.i-1 des zweiten Verteilermoduls 14(z).2 gekoppelt ist, wodurch entsprechend das Ventil 60.i des zweiten Verteilermoduls 14(z).2 über dessen Kanal 66.1 beaufschlagt werden kann.

Jeder dritte Druckluftversorgungsanschluss 82.i-3 des Versorgungsmoduls 12 führt über den zugehörigen dritten Drucklufteingangsanschluss 64.i-3 des ersten Verteilermoduls 14(z).1 und dessen zweiten Verbindungskanal 76.i-2 zum zweiten Druckluftausgangsanschluss 74.i-2, der mit dem zweiten Drucklufteingangsanschluss 64.i-2 des zweiten Verteilermoduls 14(z).2 gekoppelt ist. Der erste Verbindungskanal 76.i-1 des zweiten Verteilermoduls 14(z).2 führt dann weiter zum ersten Druckluftausgangsanschluss 74.i-2 des zweiten Verteilermoduls 14(z).2, welcher seinerseits mit dem Drucklufteingangsanschluss 64.i-1 des Sockelmoduls 16 verbunden ist. Hierdurch kann entsprechend das Ventil 60.i des Sockelmoduls 16 über dessen Kanal 66.1 mit Druckluft beaufschlagt werden.

Wie in Figur 7 anhand der zweiten Verbindungskanäle 76.10-2 und 76.11-2 des zweiten Verteilermoduls 14(z).2 gut zu erkennen ist, sind dessen zweite Verbindungskanäle 76.i-2 ohne Funktion, da sie sich zwischen geschlossenen Flächen der zweiten Anschlussseite 44 des ersten Verteilermoduls 14(z).1 und der Anschlussseite 90 des Sockelmoduls 16 erstrecken.

Wenn die Anzahl der Drucklufteingangsanschlüsse 64.i-j für jedes Ventil 60.i bzw. jede Ventilaufnahme 62.i größer mit zum Beispiel M = 4 oder M = 5 wäre, wobei auch entsprechend N = 3 oder N = 4 Druckluftausgangsanschlüsse 74.i-k vorhanden wären, könnte ein drittes oder auch ein viertes Verteilermodul 14(z).3 bzw. 14(z).4 in die Wechseleinrichtung 10 integriert werden.

Die Wechseleinrichtung 10 kann die der maximal möglichen Anzahl Z an Verteilermodulen 14(z).z umfassen, muss dies jedoch nicht. So kann die Wechseleinrichtung 10 mit den hier erläuterten Verteilermodulen 14(z).z auch nur ein einziges solches Verteilermodul 14(z).1 umfassen. In diesem Fall führen die zweiten Verbindungkanäle 76.i-2, die jeweils mit einem Druckluftaußenanschluss 82.i-3 des Versorgungsmoduls 12 verbunden sind, gegen die geschlossene Fläche der Anschlussseite 92 des Sockelmoduls 16. Dessen Drucklufteingangsanschlüsse 64.i-1 sind mit den ersten Verbindungskanälen 76.i-1 des Verteilermoduls 14(z).1 verbunden und können so über die zweiten Druckluftaußenanschlüsse 82.i-2 des Versorgungsmoduls 12 mit Druckluft beaufschlagt werden, um die Ventile 60.i im Sockelmodul 16 anzusteuern.

Grundsätzlich ist die oben beschriebene Wechseleinrichtung so konzipiert, dass nur die Anzahl von Abgabeanschlüssen durch die Anzahl der Verteilermodule eingerichtet werden kann; eine Änderung der Anzahl der Versorgungsaußenanschlüsse 20.i und damit einer Änderung der Anzahl der auswählbaren Lacke ist nicht ohne weiteres möglich.

Bei einer nicht eigens gezeigten Abwandlung kann als Sockelmodul auch ein drittes Verteilermodul 14(z).z dienen. Wenn die Wechseleinrichtung 10 in einem Ringleitungssystem etabliert werden soll, kann an dessen zweiten Anschlussseite 44 dann ein weiteres Versorgungsmodul 12 mit entsprechenden Versorgungsaußenanschlüssen 20.i angesetzt werden, so dass die Wechseleinrichtung 10 mit jeweils zwei Versorgungsaußenanschlüssen 20.i in eine entsprechende Ringleitung eingebaut werden kann.

Wenn stattdessen eine Art Sockelmodul gebildet werden soll, können die zweiten Anschlüsse 42.i auf der zweiten Anschlussseite 44 des dritten Verteilermoduls verschlossen werden. Beispielsweise können hierfür Blindstopfen vorgesehen sein oder eine Abschlussplatte mit entsprechenden Stopfen aufgesetzt werden.

Bei der oben erläuterten Wechseleinrichtung 10 sind nun die Abgabekanäle 48 der Verteilermodule 14(z).zjeweils mit einer Verbrauchereinrichtung, beispielsweise mit jeweils einem Hochrotationszerstäuber, und der Abgabekanal 48 des Sockelmoduls 16 über den Dumpaußenanschluss 96 mit der oben erwähnten Abziehleitung verbunden. Gegebenenfalls kann aber auch die Abgabeleitung 48 des Sockelmoduls 16 mit einer Verbrauchereinrichtung verbunden werden, wozu dann auch die Abgabeleitung 48 des Sockelmoduls 16 in einen entsprechenden Abgabeanschluss 52. In diesem Fall dient einer der Versorgungsaußenanschlüsse 20.i am Versorgungsmodul 12 als Dumpaußenanschluss. Wenn dies beispielsweise der Versorgungsaußenanschluss 20.1 ist, werden die zugehörigen Fluidkanäle 40.1 in den Verteilermodulen 14(z).z und der Fluidkanal 94.1 im Sockelmodul 16 nicht wie die übrigen Fluidkanäle 40.2 bis 40.15 und 94.2 bis 94.15 zum Zuführen von Fluidmaterial in die Abgabekanäle 48 genutzt, sondern zum Abführen von Fluidmaterial aus den Abgabekanälen 48 der Verteilermodule 14(z).z und des Sockelmoduls 16.

Bei einer weiteren Abwandlung werden sowohl die Abgabeleitung 48 des Sockelmoduls 16 als auch die Fluidkanäle 94.1 des Sockelmoduls 16 und 40.1 der Verteilermodule 14(z).z mit dem zugehörigen Versorgungsaußenanschluss 20.1 als Dumpleitungen verwendet. Insbesondere über letztere kann das System bei Bedarf effizient entlüftet werden.

Im Betrieb der oben erläuterten Wechseleinrichtung 10 werden nun die unterschiedlichen Lacke über die Versorgungsaußenanschlüsse 20.4 bis 20.15 im Stich auf die einzelnen damit verbundenen Fluidkanäle 40.i und 94.i bis in die Ventilsitzkammern 56.i im Sockelmodul 16 angedrückt.

Wenn ein Lack, der in einem der Fluidkanäle 40.i ansteht, über einen längeren Zeitraum nicht verwendet wird, kann das zugehörige Ventil 60.i im Sockelmodul 16 den dortigen Strömungsweg 50.i freigeben und die gewünschte Menge an abgestandenem Lack kann über die Abgabeleitung 48 und den Dumpanschluss 20.16 abgegeben und entsorgt werden.

Ansonsten wird die Wechseleinrichtung 10 in der Art und Weise betrieben, wie es auch bei anderen, vom Markt her bekannten Wechseleinrichtungen üblich ist.

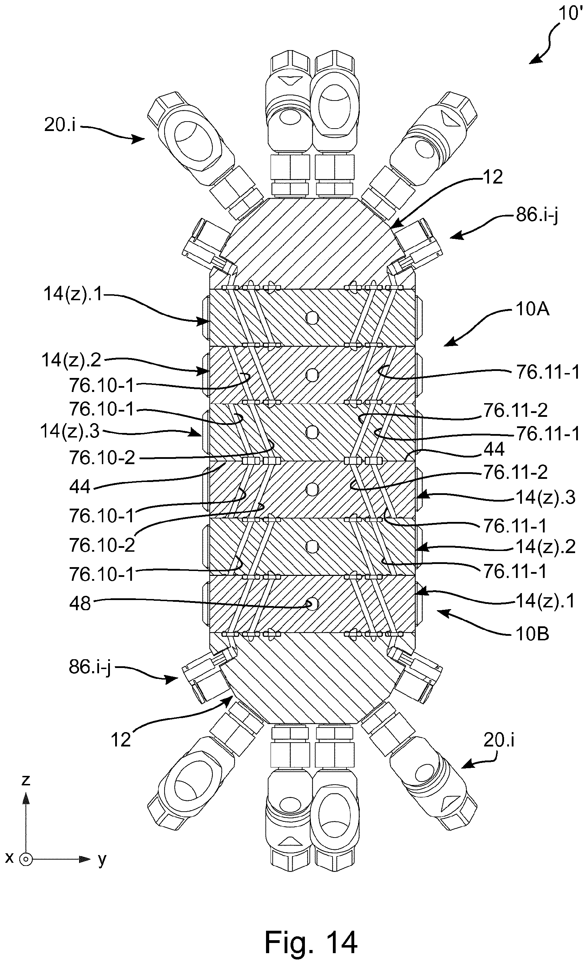

Figur 14 zeigt eine Wechseleinrichtung 10' gemäß einem zweiten Ausführungsbeispiel, welche aus zwei abgewandelte Wechseleinrichtungen 10 gemäß den Figuren 1 bis 7 ausgebildet ist, bei denen statt des Sockelmoduls 16 jeweils ein drittes Verteilermodul 14(z).3 vorgesehen ist. Diese bilden Teilwechseleinrichtungen der Wechseleinrichtung 10' und sind in Figur 11 mit 10A und 10B bezeichnet.

Die beiden Teilwechseleinrichtungen 10A und 10B sind so aneinandergesetzt und miteinander verbunden, dass die beiden zweiten Anschlussseiten 44 der jeweils dritten Verteilermodule 14(z).3 aneinanderliegen. In diesem Fall liegen sich die in Figur 14 nicht erkennbaren, jeweiligen Anschlussausnehmungen 46 der zweiten Anschlüsse 42.i sowohl der ersten Teilwechseleinrichtung 10A als auch der zweiten Teilwechseleinrichtung 10B gegenüber. Um dort eine fluiddichte Verbindung zu erhalten, müssen Dichtungs-O-Ringe mit größerer Axialerstreckung als bei den Dichtungs-O-Ringen 37 verwendet werden.

Die Versorgungsaußenanschlüsse 20.i der Versorgungsmodule 12 der Teilwechseleinrichtungen 10A und 10B sind an jeweils eine Ringleitung angeschlossen, so dass die Wechseleinrichtung 10' für jeden der 13 möglichen Lacke insgesamt sechs Abgabeleitungen 48 mit Abgabeanschlüssen 52 zur Verfügung stellt, von denen in Figur 14 nur eine ein Bezugszeichen trägt.

Wie in Figur 14 anhand der ersten und zweiten Verbindungkanäle 76.10-1, 76.10-2 und 76.11-1, 76.11-2 der dritten Verteilermodule 14(z).3 und der Verbindungkanäle 76.10-1 und 76.11-1 der zweiten Verteilermodule 14(z).2 zu erkennen ist, sind die ersten und zweiten Verbindungkanäle 76.i-1 und 76.i-2 der dritten Verteilermodule 14(z).3 und die zweiten Verbindungskanäle 76.i-2 der zweiten Verteilermodule 14(z).2 der Teilwechseleinrichtungen 10A und 10B ohne Funktion, da ihnen keine Druckluft zugeführt werden kann.

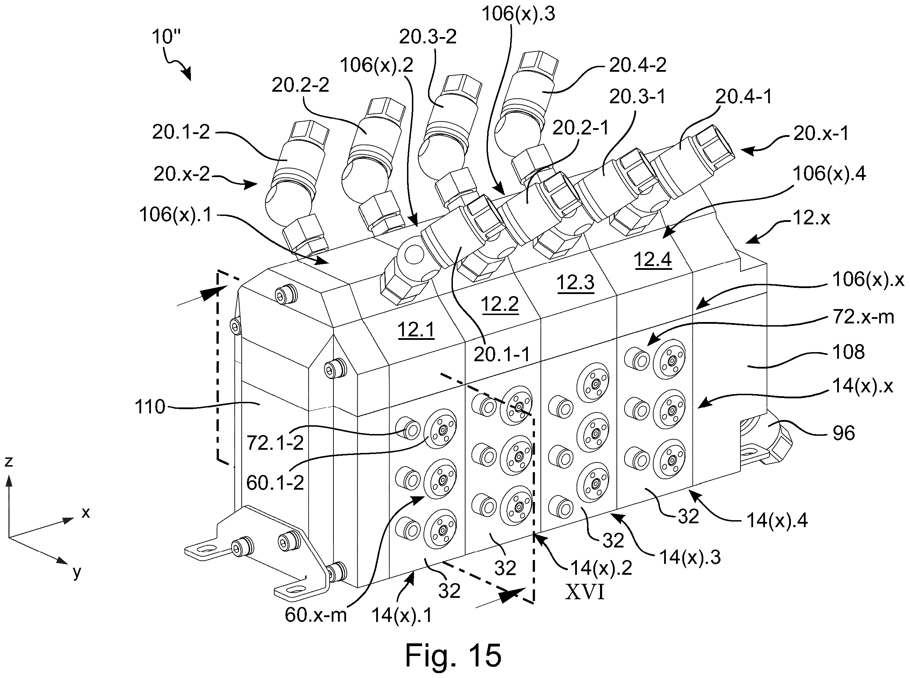

Figur 15 zeigt eine modulare Wechseleinrichtung 10" gemäß einem dritten Ausführungsbeispiel, bei welcher nur die Anzahl von Zuführanschlüssen durch die Anzahl der Verteilermodule eingerichtet werden kann.

Bei der Wechseleinrichtung 10" sind abgewandelte Versorgungsmodule 12.x und abgewandelte Verteilermodule 14(x).x mit x = 1 bis X vorhanden, wobei beim hier gezeigten Ausführungsbeispiel X = 4 ist. Jedes Versorgungsmodul 12.x trägt zwei Versorgungsaußenanschlüsse 20.x-1 und 20.x-2 und hat auf seiner Koppelseite 26 entsprechend zwei Koppelanschlüsse 24.x-1 und 24.x-2.

Jeweils ein Versorgungsmodul 12.x und ein Verteilermodul 14(x).x, deren Indizes x denselben Ziffernwert haben, bilden eine Modulbaugruppe 106(x).x.

Die Bezeichnung 14(x) und 106(x) und die Verwendung des jeweiligen Index x soll veranschaulichen, dass die Verteilermodule 14(x).x bzw. die Modulbaugruppen 106(x).x so konzipiert sind, dass sie in x-Richtung aufeinanderfolgend angeordnet sind bzw. angeordnet werden können.

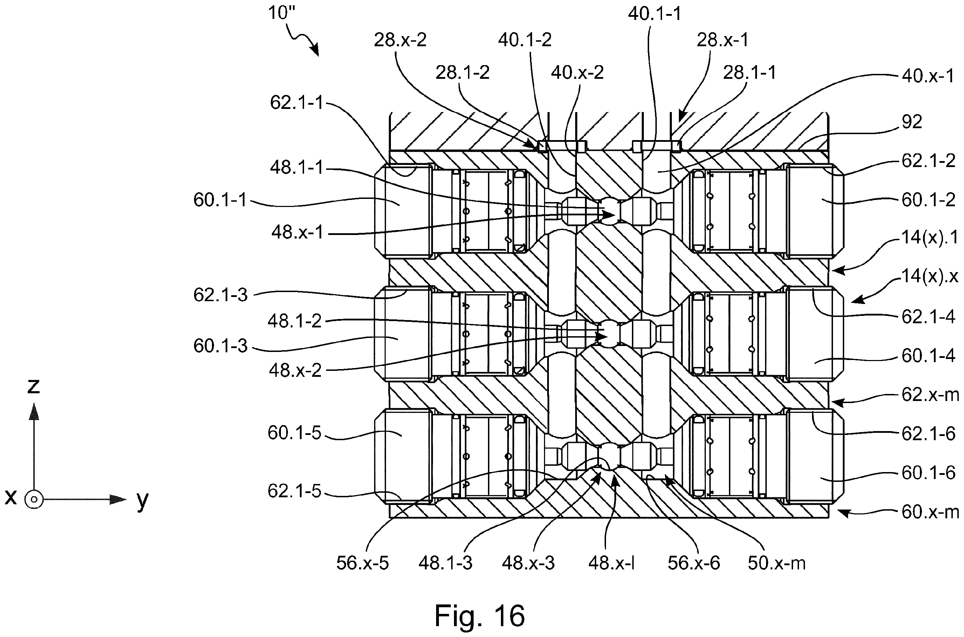

Wie Figur 16 zeigt, entspricht der Vertikalschnitt der Verteilermodule 14(x).x dem Vertikalschnitt der Wechseleinrichtung 10 in Figur 7. Das Verteilermodul 14(x).x hat wie das Sockelmodul 16 nur eine Anschlussseite 92, auf welcher nur zwei Anschlüsse vorhanden sind, die mit 28.x-1 und 28.x-2 bezeichnet sind und welche komplementär zu den Koppelanschlüssen 24.i der Verteilermodule 14(z).z sind.

Die Bezeichnung der in Figur 16 gekennzeichneten Bauteile und Komponenten ist so zu verstehen, dass der jeweilige Index x durch die Ziffer zu ersetzten ist, welche auch dem zu betrachtenden Verteilermodul 14(x).x zugeordnet ist.

Da also das erste Verteilermodul 14(x).1 gezeigt ist, sind beispielsweise die in Figur 16 mit 28.x-1 und 28.x-2 bezeichneten Anschlüsse entsprechende Anschlüsse 28.1-1 und 28.1-2 des ersten Verteilermoduls 14(x).1. Das dritte Verteilermodul 14(x).3 weist dementsprechend Anschlüsse 28.3-1 und 28.3.-2 auf.

Im Unterschied zu dem Sockelmodul 16 umfasst ein Verteilermodul 14(x).x in z-Richtung Abgabekanäle 48.x-l mit I = 1 bis O, wobei beim vorliegenden Ausführungsbeispiel O = 3 ist und entsprechend drei Abgabekanäle 48.x-1, 48.x-2 und 48.x-3 vorliegen, die über entsprechende Strömungswege 50.x-m mit zwei Fluidkanälen 40.x-1 und 40.x-2 verbunden sind. Die Strömungswege 50 sind in Figur 16 nicht eigens genkennzeichnet.

Es ist m = O × 2, d.h. beim vorliegenden Ausführungsbeispiel sind sechs Strömungswege 50.x-1 bis 50.x-6 vorhanden. Entsprechend umfasst das Verteilermodul 14(x).x auch Ventile 60.x-m, d.h. hier sechs Ventile 60.x-1 bis 60.x-2, die in entsprechenden Ventilaufnahmen 62.x-m, d.h. hier in sechs Ventilaufnahmen 62.x-1 bis 62.x-6 aufgenommen sind.

Die Fluidkanäle 40.x-1 und 40.x-2 sind nicht durchgehend und verlaufen jeweils von einem zugehörigen Anschluss 28.x-1 bzw. 28.x-2 bis zur zugehörigen untersten Ventilsitzkammer 56.x-5 bzw. 56.x-6.

In weiterer Abwandlung gegenüber den Verteilermodulen 14(z).z führen die Verteilermodule 14(x).x für jedes Ventil 60.x-1 bis 60.x-6 einen eigenen Druckluftaußenanschluss 86.x-m mit sich, die mit den jeweiligen Ringräumen verbunden sind, die mit 72.x-m zu bezeichnen sind; dies ist in Figur 15 zu erkennen.

Folglich sind keine Druckluftaußenanschlüsse an den Versorgungsmodulen 12.x vorhanden und es gibt auch keine Verbindungskanäle für Druckluft wie die Verbindungskanäle 76.i-k bei den Verteilermodulen 14(z).z.

Alternativ können die Verteilermodule 14(x).x aber entsprechend den Verteilermodulen 14(z).z ausgebildet sein und die Druckluft über das jeweilige Versorgungsmodul 12.x zugeführt werden.

Die Abgabekanäle 48.x-l sind als Durchgangskanäle ausgebildet und erstrecken sich jeweils zwischen einem von außen zugänglichen ersten Anschluss auf einer ersten Abgabeseite des Gehäuses 32 und einem von außen zugänglichen zweiten Anschluss auf einer zweiten Abgabeseite des Gehäuses 32. Dies entspricht jedoch dem Prinzip bei den Fluidkanälen 40.i der Verteilermodule 40.i, wobei die Anschlüsse der Abgabekanäle 40.x-l und die Abgabeseiten des Gehäuses 32 der Verteilermodule 14(x).x im Einzelnen in den Figuren 12 und 13 nicht zu erkennen ist.

Die beiden Anschlüsse des Abgabekanals 48.x-l jedenfalls sind derart komplementär zueinander ausgebildet, dass bei zwei miteinander verbundenen Verteilermodulen 14(x).x₁ und 14(x).x₂ mit x₂ = x₁ + 1 die zweiten Anschlüsse des ersten Verteilermoduls 14(x).x₁ und die ersten Anschlüsse des zweiten Verteilermoduls 14(x).x₂ fluiddicht miteinander verbunden sind.

Auf diese Weise kann die Wechseleinrichtung 10" in x-Richtung verlängert werden, wobei durch jede Moduleinheit 106(x).x aus einem Versorgungsmodul 12.x und einem Verteilermodul 14(x).x aneinander gesetzt wird. Die Abgabekanäle 48.x-1, 48.x-2 des in x-Richtung letzten Verteilermoduls 14(x).x, vorliegend also des Verteilermoduls 14(x).4, sind mit einem jeweiligen Abgabeanschluss 52 einer Abgabeanschlusseinheit 108 verbunden, die an diesem letzten Verteilermodul 14(x).x befestigt ist, wogegen der dritte Abgabekanal 48.x-3, d.h. konkret der Abgabekanal 48.4-3, mit dem Dumpaußenanschluss 96 verbunden ist.

Auf der von den Abgabeanschlüssen 52 und dem Dumpaußenanschluss 96 abliegenden Seite ist das erste Verteilermodul 14(x).1 mit einer Verschlussplatte 110 verschlossen, welche dessen Abgabekanäle 48.1-1, 48.1-2 und 48.1-3 abdichtet.

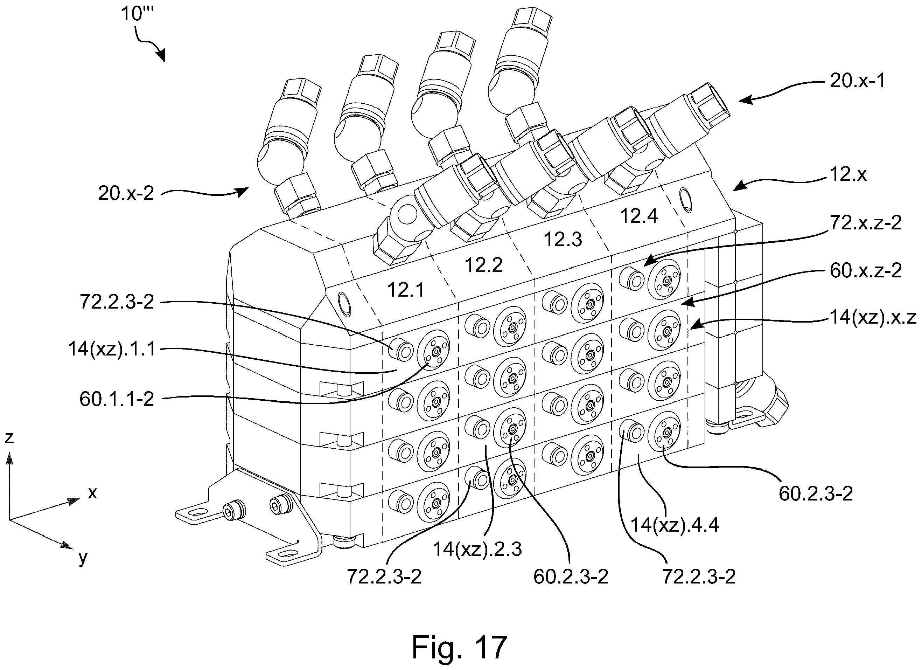

Figur 17 zeigt als viertes Ausführungsbeispiel eine Wechselvorrichtung 10"', bei welcher die Anzahl von Zuführanschlüssen und die Anzahl von Abgabeanschlüssen durch die Anzahl der Verteilermodule eingerichtet werden kann.

Dort arbeiten die Versorgungsmodule 12.x gemäß den Figuren 12 und 13 mit nochmals modifizierten Verteilermodulen 14(xz).x.z und Sockelmodulen 16(xz).x.z zusammen. Das Bezugszeichen 14(xz) und die Verwendung der Indizes .x und .z sollen veranschaulichen, dass die die Verteilermodule 14(xz).x.z so konzipiert sind, dass sie in x-Richtung und in z-Richtung in einer Matrix in der xz-Ebene angeordnet sind bzw. angeordnet werden können. Die Indizes .x geben dabei die Position der Verteilermodule 14(xz).x.z in x-Richtung und die Indizes .z die Position der Verteilermodule 14(xz).x.z in z-Richtung an, ausgehend von dem Verteilermodul 14(xz).1.1 oben links in Figur 17, in welcher exemplarisch noch die Verteilermodule 14(xz).2.3 und 14(xz).4.4 mit gesonderten Bezugszeichen versehen sind.

Die Verteilermodule 14(xz).x.z sind als eine Art Modulriegel ausgebildet, welcher einen Abgabekanal 48.x.z und zwei durchgehende Fluidkanäle 40.x.z-1 und 40.x.z-2 mit jeweils einem ersten Anschluss 28.x.z-1 bzw. 28.x.z-2 sowie jeweils einem zweiten Anschluss 42.x.z-1 bzw. 42.x.z-2 hat, wobei diese Komponenten nicht eigens gezeigt sind. Es gibt zwei Ventile 60.x.z-1 und 60.x.z-2, die in Ventilaufnahmen 62.x.z-1 bzw. 62.x.z-2 aufgenommen sind und zwei Strömungswege 50.x.z-1 und 50.x.z-2 freigeben oder verschließen können. In Figur 17 sind nur die Ventile 60.x.z-2 zu erkennen.

Die Verteilermodule 14(xz).x.z führen für jedes Ventil 60.x.z-1 und 60.x-2 einen eigenen Druckluftaußenanschluss 86.x.z-1 bzw. 86.x.z-2 mit sich, die mit den jeweiligen Ringräumen verbunden sind, die mit 72.x.z-1 bzw. 72.x.z-2 zu bezeichnen sind. In Figur 17 sind nur die Druckluftaußenanschlüsse 72.x.z-2 zu erkennen.

Verteilermodule 14.1.1, 14.1.3 und 14.1.4 arbeiten beispielsweise mit dem Versorgungsmodul 12.1 zusammen; das Verteilermodul 14.3.3 wird zum Beispiel durch das Versorgungsmodul 12.3 gespeist.

Die Verteilermodule 14.x.z können in x-Richtung in der Weise miteinander verbunden werden, wie es zu der Wechseleinrichtung 10" nach den Figuren 15 und 16 erläutert wurde. Außerdem können die Verteilermodule 14.x.z in z-Richtung in der Weise miteinander verbunden werden, wie es oben zu der Wechseleinrichtung 10 nach den Figuren 1 bis 7 oder der Wechseleinrichtung 10' nach Figur 11 erläutert wurde.

Die Wechseleinrichtung 10‴ ist auf diese Weise in x-Richtung und in z-Richtung erweiterbar, so dass sowohl die Anzahl der Versorgungsaußenanschlüsse 20.x-1 und 20.x-2 als auch die Anzahl der Abgabekanäle 48.x.z variiert werden kann.

## Patentansprüche

1. Modul für eine modulare Wechseleinrichtung für Beschichtungsmaterialien, insbesondere für Lacke, mit
a) einem Gehäuse (32);
b) einem Fluidkanal (40.i; 40x-1, 40.x-2; 40.x.z-1, 40.x.z-2), welchem von außen ein Fluidmaterial zuführbar ist;
c) einem Abgabekanal (48; 48.x-1; 48.x.z), welcher mit einer Verbrauchereinrichtung verbindbar ist und welcher über einen Strömungsweg (50; 50.x-m; 50.x-1, 50.x-2) mit dem Fluidkanal (40.i; 40x-1, 40.x-2; 40.x.z-1, 40.x.z-2) in Verbindung steht;
wobei
d) der Strömungsweg (50; 50.x-m; 50.x.z-1; 50.x.z-2) zwischen dem Fluidkanal (40.i; 40x-1, 40.x-2; 40.x.z-1, 40.x.z-2) und dem Abgabekanal (48; 48.x-l; 48.x.z) mittels einer Verschlusseinrichtung (60.i; 60.x-m; 60.x.z-1, 60.x.z-2) wahlweise verschließbar oder freiggebbar ist;
e) der Fluidkanal (40.i; 40.x.z-1, 40.x.z-2) als Durchgangskanal ausgebildet ist und sich zwischen einem von außen zugänglichen ersten Anschluss (28.i; 28.x-1, 28.x-2) auf einer ersten Anschlussseite (30) des Gehäuses (32) und einem von außen zugänglichen zweiten Anschluss (42.i; 42.x.z-1, 42.x.z-2) auf einer zweiten Anschlussseite (44) des Gehäuses (32) erstreckt,
wobei
die beiden Anschlüsse (28.i; 28.x-1, 28.x-2; 42.i; 42.x.z-1, 42.x.z-2) des Fluidkanals (40.i; 40x-1, 40.x-2; 40.x.z-1, 40.x.z-2) derart komplementär zueinander ausgebildet sind, dass bei zwei miteinander verbundenen Modulen (14(z).z; 14(xz).x.z) der zweite Anschluss (42.i; 42.x.z-1, 42.x.z-2) des ersten Moduls und der erste Anschluss (28.i; 28.x-1, 28.x-2) des zweiten Moduls fluiddicht miteinander verbunden sind;
und/oder
f) der Abgabekanal (48.x-1) ein erster Abgabekanal ist und das Modul einen zweiten Abgabekanal (48.x-2) oder mehrere weitere Abgabekanäle (48.x-l) umfasst, welche jeweils über einen Strömungsweg (50.x-l) mit dem Fluidkanal (40.x-1) in Verbindung stehen;
wobei
g) die Verschlusseinrichtung ein druckluftbetätigtes Ventil (60.i; 60.x-n; 60.x.z-1, 60.x.z-2) umfasst, welches über einen Drucklufteingangsanschluss (64.i-j) mit Druckluft beaufschlagbar ist;
**dadurch gekennzeichnet, dass**
h) der Drucklufteingangsanschluss (64.i-j) ein erster Drucklufteingangsanschluss (64.i-1) auf der ersten Anschlussseite (30) des Moduls (14.i; 14(z).z; 14(xz).x.z) ist und das Modul (14.i; 14(z).z; 14(xz).x.z) wenigstens einen zweiten Drucklufteingangsanschluss (64.i-2) auf der ersten Anschlussseite (30) umfasst, welcher über einen Verbindungskanal (76.i-1) mit einem Druckluftausgangsanschluss (74.i-1) auf der zweiten Anschlussseite verbunden ist;
i) der erste Drucklufteingangsanschluss (64.i-1) und der Druckluftausgangsanschluss (74.i-1) derart komplementär zueinander ausgebildet sind, dass bei zwei miteinander verbundenen Modulen (14.i; 14(z).z; 14(xz).x.z) der Druckluftausgangsanschluss (74.i-1) des ersten Moduls und der erste Drucklufteingangsanschluss (64.i-2) des zweiten Moduls fluiddicht miteinander verbunden sind.

2. Modul nach Anspruch 1, **dadurch gekennzeichnet, dass**
a) der Abgabekanal (48.x-l; 48.x.z) als Durchgangskanal ausgebildet ist und sich zwischen einem von außen zugänglichen ersten Anschluss auf einer ersten Abgabeseite des Gehäuses (32) und einem von außen zugänglichen zweiten Anschluss auf einer zweiten Abgabeseite des Gehäuses (32) erstreckt;
b) die beiden Anschlüsse des Abgabekanals (48.x-l; 48.x.z) derart komplementär zueinander ausgebildet sind, dass bei zwei miteinander verbundenen Modulen (14(z).z; 14(xz).x.z) der zweite Anschluss des ersten Moduls (14(z).z; 14(xz).x.z) und der erste Anschluss des zweiten Moduls (14(z).z; 14(xz).x.z) fluiddicht miteinander verbunden sind.

3. Modul nach Anspruch 1 oder 2, **dadurch gekennzeichnet, dass** der erste Anschluss (28.i; 28.x-1, 28.x-2) des Fluidkanals (40.i; 40.x.z-1, 40.x.z-2) und/oder des Abgabekanals (48.x-l; 48.x.z) und/oder der zweite Anschluss (42.i; 42.x.z-1, 42.x.z-2) des Fluidkanal (40.i; 40.x.z-1, 40.x.z-2) und/oder des Abgabekanals (48.x-l; 48.x.z) als komplementäre Ausnehmungen (38; 46) ausgebildet sind, die mit einem Dichtungselement zusammenarbeiten.

4. Modul nach einem der Ansprüche 1 bis 3, **dadurch gekennzeichnet, dass** der Fluidkanal (40.i; 40.x.z-1, 40.x.z-2) ein erster Fluidkanal ist und das Modul (14.i; 14(z).z; 14(x).x; 14(xz).x.z) einen zweiten Fluidkanal oder mehrere weitere Fluidkanäle (40.i; 40.x.z-1, 40.x.z-2) umfasst, welchenjeweils von außen Fluidmaterial zuführbar ist.

5. Modul nach einem der Ansprüche 1 bis 4, **dadurch gekennzeichnet, dass** das Modul (14.i; 14(z).z; 14(xz).x.z) eine Anzahl M >= 3 an Drucklufteingangsanschlüssen (64.i-j) umfasst und eine Anzahl N = M - 1 an Druckluftausgangsanschlüssen (74.i-k) umfasst, wobei jeder weitere ab dem dritten Drucklufteingangsanschluss (64.i-j) über einen Verbindungskanal (76.i-k) mit jeweils einem der weiteren ab dem zweiten Druckluftausgangsanschlüsse (74.i-k) verbunden ist, und jeder ab dem zweiten Drucklufteingangsanschluss (64.i-j) und jeder ab dem zweiten Druckluftausgangsanschluss (74.i-k) derart komplementär zueinander ausgebildet sind, dass bei zwei miteinander verbunden Modulen jeweils jeder ab dem zweiten Drucklufteingangsanschluss (64.i-j) des ersten Moduls mit jeweils einem ab dem zweiten Druckluftausgangsanschluss (74.i-k) des zweiten Moduls verbunden ist.

6. Wechseleinrichtung für Beschichtungsmaterial, welche aus mehreren Modulen aufgebaut ist, **dadurch gekennzeichnet, dass** wenigstens ein Modul (14.i; 14(z).z; 14(x).x; 14(xz).x.z) als Modul nach einem der Ansprüche 1 bis 5 ausgebildet ist.

7. Wechseleinrichtung nach Anspruch 6, **dadurch gekennzeichnet, dass** ein Versorgungsmodul (12) vorhanden ist, welches mit dem Modul nach einem der Ansprüche 1 bis 5 verbindbar ist und einen oder mehrere Versorgungsaußenanschlüsse (20.i; 20.x-1; 20.x-2) für Fluidmaterialien bereitstellt, wobei ein vorhandener Versorgungsaußenanschluss (20.i; 20.x-1; 20.x-2) mit einem ersten Anschluss (28.i; 28.x-1, 28.x-2; 28.x.z-1, 28.x.z-2) eines vorhandenen Fluidkanals (40.i; 40.x-1, 40.x-2; 40.x.z-1, 40.x.z-2) verbindbar ist.

8. Wechseleinrichtung nach Anspruch 7, **dadurch gekennzeichnet, dass** das Versorgungsmodul für jeden vorhandenen ersten Anschluss (28.i; 28.x-1, 28.x-2; 28.x.z-1, 28.x.z-2) eines Fluidkanals (40.i; 40.x-1, 40.x-2; 40.x.z-1, 40.x.z-2) des Moduls nach einem Ansprüche 1 bis 5 einen Koppelanschluss (24.i; 24.x-1, 24.x-2) aufweist, der mit einem Versorgungsaußenanschluss (20.i; 20.x-1; 20.x-2) verbunden ist und mit dem ersten Anschluss (28.i; 28.x-1, 28.x-2; 28.x.z-1, 28.x.z-2) des Fluidkanals (40.i; 40.x-1, 40.x-2; 40.x.z-1, 40.x.z-2) komplementär ist.

9. Wechseleinrichtung nach Anspruch 7 oder 8, **dadurch gekennzeichnet, dass** das Versorgungsmodul (12) einen oder mehrere Druckluftaußenanschlüsse (86.i-j) umfasst, die mit Druckluftversorgungsanschlüssen (82.i-j) verbunden sind, die ihrerseits zu vorhandenen Drucklufteingangsanschlüssen (64.i-j) eines Moduls nach einem der Ansprüche 1 bis 5 komplementär sind.

10. Wechseleinrichtung nach einem der Ansprüche 6 bis 9, **dadurch gekennzeichnet, dass** auf der von dem Versorgungsmodul (12) abliegenden Seite des wenigstens einen oder der mehreren Module nach einem Ansprüche 1 bis 5 ein Sockelmodul (16) angeordnet ist, welches einen oder mehrere als Sackkanäle ausgebildete, nicht-durchgehende Fluidkanäle (94.i) umfasst, von denen jeder einen als Durchgangskanal ausgebildeten Fluidkanal (40.i; 40.x.z-1, 40.x.z-2) des benachbarten Moduls nach einem der Ansprüche 1 bis 5 abschließt.

## Claims

1. Module for a modular changeover device for coating materials, in particular for paints, having
a) a housing (32);
b) a fluid channel (40.i; 40x-1, 40.x-2; 40.x.z-1, 40.x.z-2) to which a fluid material can be fed from the outside;
c) a discharge channel (48; 48.x-1; 48.x.z) which can be connected to a consumer device and is connected to the fluid channel (40.i; 40x-1, 40.x-2; 40.x.z-1, 40.x.z-2) via a flow path (50; 50.x-m; 50.x-1, 50.x-2);
wherein
d) the flow path (50; 50.x-m; 50.x.z-1; 50.x.z-2) between the fluid channel (40.i; 40x-1, 40.x-2; 40.x.z-1, 40.x.z-2) and the discharge channel (48; 48.x-l; 48.x.z) can be selectively closed off or opened up by means of a closure device (60.i; 60.x-m; 60.x.z-1, 60.x.z-2);
e) the fluid channel (40.i; 40.x.z-1, 40.x.z-2) is in the form of a passage channel and extends between a first connection (28.i; 28.x-1, 28.x-2), accessible from the outside, on a first connection side (30) of the housing (32) and a second connection (42.i; 42.x.z-1, 42.x.z-2), accessible from the outside, on a second connection side (44) of the housing (32),
wherein
the two connections (28.i; 28.x-1, 28.x-2; 42.i; 42.x.z-1, 42.x.z-2) of the fluid channel (40.i; 40x-1, 40.x-2; 40.x.z-1, 40.x.z-2) are formed so as to be complementary to one another in such a way that, for two modules (14(z).z; 14(xz).x.z) connected to one another, the second connection (42.i; 42.x.z-1, 42.x.z-2) of the first module and the first connection (28.i; 28.x-1, 28.x-2) of the second module are connected to one another in a fluid-tight manner;
and/or
f) the discharge channel (48.x-1) is a first discharge channel and the module comprises a second discharge channel (48.x-2) or multiple further discharge channels (48.x-l), which are in each case connected to the fluid channel (40.x-1) via a flow path (50.x-l);
wherein
g) the closure device comprises a compressed-air-actuated valve (60.i; 60.x-n; 60.x.z-1, 60.x.z-2) which can be charged with compressed air via a compressed-air inlet connection (64.i-j);
**characterized in that**
h) the compressed-air inlet connection (64.i-j) is a first compressed-air inlet connection (64.i-1) on the first connection side (30) of the module (14.i; 14(z).z; 14(xz).x.z), and the module (14.i; 14(z).z; 14(xz).x.z) comprises at least a second compressed-air inlet connection (64.i-2) on the first connection side (30), which is connected via a connecting channel (76.i-1) to a compressed-air outlet connection (74.i-1) on the second connection side;
i) the first compressed-air inlet connection (64.i-1) and the compressed-air outlet connection (74.i-1) are formed so as to be complementary to one another in such a way that, for two modules (14.i; 14(z).z; 14(xz).x.z) connected to one another, the compressed-air outlet connection (74.i-1) of the first module and the first compressed-air inlet connection (64.i-2) of the second module are connected to one another in a fluid-tight manner.

2. Module according to Claim 1, **characterized in that**
a) the discharge channel (48.x-l; 48.x.z) is in the form of a passage channel and extends between a first connection, accessible from the outside, on a first discharge side of the housing (32) and a second connection, accessible from the outside, on a second discharge side of the housing (32);
b) the two connections of the discharge channel (48.x-l; 48.x.z) are formed so as to be complementary to one another in such a way that, for two modules (14(z).z; 14(xz).x.z) connected to one another, the second connection of the first module (14(z).z; 14(xz).x.z) and the first connection of the second module (14(z).z; 14(xz).x.z) are connected to one another in a fluid-tight manner.

3. Module according to Claim 1 or 2, **characterized in that** the first connection (28.i; 28.x-1, 28.x-2) of the fluid channel (40.i; 40.x.z-1, 40.x.z-2) and/or of the discharge channel (48.x-l; 48.x.z) and/or the second connection (42.i; 42.x.z-1, 42.x.z-2) of the fluid channel (40.i; 40.x.z-1, 40.x.z-2) and/or of the discharge channel (48.x-l; 48.x.z) are formed as complementary recesses (38; 46) which interact with a sealing element.

4. Module according to one of Claims 1 to 3, **characterized in that** the fluid channel (40.i; 40.x.z-1, 40.x.z-2) is a first fluid channel, and the module (14.i; 14(z).z; 14(x).x; 14(xz).x.z) comprises a second fluid channel or multiple further fluid channels (40.i; 40.x.z-1, 40.x.z-2), to which in each case fluid material can be fed from the outside.

5. Module according to one of Claims 1 to 4, **characterized in that** the module (14.i; 14(z).z; 14(xz).x.z) comprises a number M ≥ 3 of compressed-air inlet connections (64.i-j) and comprises a number N = M - 1 of compressed-air outlet connections (74.i-k), wherein every further compressed-air inlet connection (64.i-j) from the third one is connected via a connecting channel (76.i-k) to in each case one of the further compressed-air outlet connections (74.i-k) from the second one, and every compressed-air inlet connection (64.i-j) from the second one and every compressed-air outlet connection (74.i-k) from the second one are formed so as to be complementary to one another in such a way that, for two modules connected to one another, every compressed-air inlet connection (64.i-j) from the second one of the first module is connected to in each case one compressed-air outlet connection (74.i-k) from the second one of the second module.

6. Changeover device for coating material, which is constructed from multiple modules, **characterized in that** at least one module (14.i; 14(z).z; 14(x).x; 14(xz).x.z) is in the form of a module according to one of Claims 1 to 5.

7. Changeover device according to Claim 6, **characterized in that** provision is made of a supply module (12) which can be connected to the module according to one of Claims 1 to 5 and which provides one or more external supply connections (20.i; 20.x-1; 20.x-2) for fluid materials, wherein a provided external supply connection (20.i; 20.x-1; 20.x-2) can be connected to a first connection (28.i; 28.x-1, 28.x-2; 28.x.z-1, 28.x.z-2) of a provided fluid channel (40.i; 40.x-1, 40.x-2; 40.x.z-1; 40.x.z-2).

8. Changeover device according to Claim 7, **characterized in that** the supply module has a coupling connection (24.i; 24.x-1, 24.x-2) for each provided first connection (28.i; 28.x-1, 28.x-2; 28.x.z-1, 28.x.z-2) of a fluid channel (40.i; 40.x-1, 40.x-2; 40.x.z-1; 40.x.z-2) of the module according to one of Claims 1 to 5, which coupling connection is connected to an external supply connection (20.i; 20.x-1; 20.x-2) and is complementary to the first connection (28.i; 28.x-1, 28.x-2; 28.x.z-1, 28.x.z-2) of the fluid channel (40.i; 40.x-1, 40.x-2; 40.x.z-1; 40.x.z-2).

9. Changeover device according to Claim 7 or 8, **characterized in that** the supply module (12) comprises one or more external compressed-air connections (86.i-j), which are connected to compressed-air supply connections (82.i-j) which, for their part, are complementary to provided compressed-air inlet connections (64.i-j) of a module according to one of Claims 1 to 5.

10. Changeover device according to one of Claims 6 to 9, **characterized in that**, on that side of the at least one or more modules according to one of Claims 1 to 5 which is remote from the supply module (12), there is arranged a base module (16) which comprises one or more non-continuous fluid channels (94.i) in the form of blind channels, each of which terminates a fluid channel (40.i; 40.x.z-1; 40.x.z-2), in the form of a passage channel, of the adjacent module according to one of Claims 1 to 5.

## Revendications

1. Module pour un dispositif de changement modulaire pour matériaux de revêtement, notamment pour peintures, avec
a) un logement (32) ;
b) un canal de fluide (40.i; 40x-1, 40.x-2; 40.x.z-1, 40.x.z-2) auquel un matériau fluidique peut être amené de l'extérieur ;
c) un canal d'évacuation (48; 48.x-1; 48.x.z) qui peut être connecté à un dispositif consommateur et qui est en connexion avec le canal de fluide (40.i ; 40x-1, 40.x-2; 40.x.z-1, 40.x.z-2) par le biais d'un trajet d'écoulement (50 ; 50.x-m ; 50.x-1, 50.x-2);
dans lequel
d) le trajet d'écoulement (50; 50.x-m ; 50.x.z-1; 50.x.z-2) entre le canal de fluide (40.i ; 40x-1, 40.x-2; 40.x.z-1, 40.x.z-2) et le canal d'évacuation (48 ; 48.x-1; 48.x.z) peut être fermé ou peut être libéré au choix au moyen d'un dispositif de fermeture (60.i ; 60.x-m ; 60.x.z-1, 60.x.z-2) ;
e) le canal de fluide (40.i; 40.x.z-1, 40.x.z-2) est réalisé en tant que canal de passage et s'étend entre un premier raccord accessible de l'extérieur (28.i ; 28.x-1, 28.x-2) sur un premier côté de raccord (30) du logement (32) et un second raccord accessible de l'extérieur (42.i; 42.x.z-1, 42.x.z-2) sur un second côté de raccord (44) du logement (32),
dans lequel
les deux raccords (28.i ; 28.x-1, 28.x-2; 42.i ; 42.x.z-1, 42.x.z-2) du canal de fluide (40.i; 40x-1, 40.x-2; 40.x.z-1, 40.x.z-2) sont réalisés de manière complémentaire l'un à l'autre de telle sorte qu'en cas de deux modules connectés l'un à l'autre (14(z).z; 14(xz).x.z), le second raccord (42.i ; 42.x.z-1, 42.x.z-2) du premier module et le premier raccord (28.i; 28.x-1, 28.x-2) du second module sont connectés l'un à l'autre de manière étanche au fluide ;
et/ou
f) le canal d'évacuation (48.x-1) est un premier canal d'évacuation et le module comprend un second canal d'évacuation (48.x-2) ou plusieurs canaux d'évacuation supplémentaires (48.x-1) qui sont en connexion chacun avec le canal de fluide (40.x-1) par le biais d'un trajet d'écoulement (50.x-1); dans lequel
g) le dispositif de fermeture comprend une vanne actionnée par air comprimé (60.i; 60.x-n ; 60.x.z-1, 60.x.z-2) qui peut être sollicitée avec de l'air comprimé par le biais d'un raccord d'entrée d'air comprimé (64.i-j) ;
**caractérisé en ce que**
h) le raccord d'entrée d'air comprimé (64.i-j) est un premier raccord d'entrée d'air comprimé (64.i-1) sur le premier côté de raccord (30) du module (14.i; 14(z).z; 14(xz).x.z) et le module (14.i; 14(z).z; 14(xz).x.z) comprend au moins un second raccord d'entrée d'air comprimé (64.i-2) sur le premier côté de raccord (30) qui est connecté à un raccord de sortie d'air comprimé (74.i-1) sur le second côté de raccord par le biais d'un canal de connexion (76.i-1);
i) le premier raccord d'entrée d'air comprimé (64.i-1) et le raccord de sortie d'air comprimé (74.i-1) sont réalisés de manière complémentaire l'un à l'autre de telle sorte qu'en cas de deux modules connectés l'un à l'autre (14.i; 14(z).z; 14(xz).x.z), le raccord de sortie d'air comprimé (74.i-1) du premier module et le premier raccord d'entrée d'air comprimé (64.i-2) du second module sont connectés l'un à l'autre de manière étanche au fluide.

2. Module selon la revendication 1, **caractérisé en ce que**
a) le canal d'évacuation (48.x-1; 48.x.z) est réalisé en tant que canal de passage et s'étend entre un premier raccord accessible de l'extérieur sur un premier côté d'évacuation du logement (32) et un second raccord accessible de l'extérieur sur un second côté d'évacuation du logement (32) ;
b) les deux raccords du canal d'évacuation (48.x-1; 48.x.z) sont réalisés de manière complémentaire l'un à l'autre de telle sorte qu'en cas de deux modules connectés l'un à l'autre (14(z).z; 14(xz).x.z), le second raccord du premier module (14(z).z; 14(xz).x.z) et le premier raccord du second module (14(z).z; 14(xz).x.z) sont connectés l'un à l'autre de manière étanche au fluide.

3. Module selon la revendication 1 ou 2, **caractérisé en ce que** le premier raccord (28.i; 28.x-1, 28.x-2) du canal de fluide (40.i ; 40.x.z-1, 40.x.z-2) et/ou du canal d'évacuation (48.x-1; 48.x.z) et/ou le second raccord (42.i; 42.x.z-1, 42.x.z-2) du canal de fluide (40.i ; 40.x.z-1, 40.x.z-2) et/ou du canal d'évacuation (48.x-1; 48.x.z) sont réalisés en tant qu'évidements complémentaires (38; 46) qui coopèrent avec un élément d'étanchéité.

4. Module selon une des revendications 1 à 3, **caractérisé en ce que** le canal de fluide (40.i; 40.x.z-1, 40.x.z-2) est un premier canal de fluide et le module (14.i; 14(z).z; 14(x).x; 14(xz).x.z) comprend un second canal de fluide ou plusieurs canaux de fluide supplémentaires (40.i; 40.x.z-1, 40.x.z-2) auxquels du matériau fluidique peut à chaque fois être amené de l'extérieur.

5. Module selon une des revendications 1 à 4, **caractérisé en ce que** le module (14.i; 14(z).z; 14(xz).x.z) comprend un nombre M >= 3 de raccords d'entrée d'air comprimé (64.i-j) et comprend un nombre N = M - 1 de raccords de sortie d'air comprimé (74.i-k), dans lequel tout raccord supplémentaire à partir du troisième raccord d'entrée d'air comprimé (64.i-j) est connecté à chaque fois à un des raccords supplémentaires à partir du deuxième raccord de sortie d'air comprimé (74.i-k) par le biais d'un canal de connexion (76.i-k), et chaque raccord à partir du deuxième raccord d'entrée d'air comprimé (64.i-j) et chaque raccord à partir du deuxième raccord de sortie d'air comprimé (74.i-k) sont réalisés de manière complémentaire l'un à l'autre de telle sorte qu'en cas de deux modules connectés l'un à l'autre, chaque raccord respectif à partir du deuxième raccord d'entrée d'air comprimé (64.i-j) du premier module est connecté à un raccord respectif à partir du deuxième raccord de sortie d'air comprimé (74.i-k) du second module.

6. Dispositif de changement pour matériau de revêtement, qui est constitué de plusieurs modules, **caractérisé en ce qu'**au moins un module (14.i; 14(z).z; 14(x).x; 14(xz).x.z) est réalisé en tant que module selon une des revendications 1 à 5.

7. Dispositif de changement selon la revendication 6, **caractérisé en ce qu'**un module d'alimentation (12) est présent, lequel peut être connecté au module selon une des revendications 1 à 5 et met à disposition un ou plusieurs raccords externes d'alimentation (20.i; 20.x-1; 20.x-2) pour des matériaux fluidiques, dans lequel un raccord externe d'alimentation présent (20.i; 20.x-1; 20.x-2) peut être connecté à un premier raccord (28.i ; 28.x-1, 28.x-2; 28.x.z-1, 28.x.z-2) d'un canal de fluide présent (40.i; 40.x-1, 40.x-2; 40.x.z-1, 40.x.z-2).

8. Dispositif de changement selon la revendication 7, **caractérisé en ce que** le module d'alimentation pour chaque premier raccord présent (28.i ; 28.x-1, 28.x-2; 28.x.z-1, 28.x.z-2) d'un canal de fluide (40.i; 40.x-1, 40.x-2; 40.x.z-1, 40.x.z-2) du module selon une des revendications 1 à 5 présente un raccord de couplage (24.i; 24.x-1, 24.x-2) qui est connecté à un raccord externe d'alimentation (20.i ; 20.x-1; 20.x-2) et est complémentaire au premier raccord (28.i; 28.x-1, 28.x-2; 28.x.z-1, 28.x.z-2) du canal de fluide (40.i ; 40.x-1, 40.x-2; 40.x.z-1, 40.x.z-2).

9. Dispositif de changement selon la revendication 7 ou 8, **caractérisé en ce que** le module d'alimentation (12) comprend un ou plusieurs raccords externes d'air comprimé (86.i-j) qui sont connectés à des raccords d'alimentation en air comprimé (82.i-j) qui sont complémentaires de leur côté à des raccords d'entrée d'air comprimé (64.i-j) d'un module selon une des revendications 1 à 5.

10. Dispositif de changement selon une des revendications 6 à 9, **caractérisé en ce qu'**un module de socle (16) qui comprend un ou plusieurs canaux de fluide non traversants (94.i), réalisés en tant que canaux sans issue, parmi lesquels chacun ferme un canal de fluide (40.i; 40.x.z-1, 40.x.z-2) réalisé en tant que canal de passage du module voisin selon une des revendications 1 à 5, est disposé sur le côté de l'au moins un ou de la pluralité de modules selon une des revendications 1 à 5, éloigné du module d'alimentation (12).
